# EUROPEAN PATENT SPECIFICATION

(11) **EP 4 216 046 B1**
(45) Date of publication and mention of the grant of the patent: **01.07.2026**
(21) Application number: 21892341.5
(22) Date of filing: 11.11.2021
(51) Int. Cl.: G06F 3/0481, G06F 3/0484, G06F 3/04817, G06F 3/04847, G06F 3/04883, H04M 1/72454, H04M 1/02, G06F 1/16

(54) **ELECTRONIC DEVICE INCLUDING DISPLAY WITH VARIABLE DISPLAY AREA AND METHOD FOR VARIABLY OPERATING ASPECT RATIO USING APP ICON**
ELEKTRONISCHE VORRICHTUNG MIT ANZEIGE MIT VARIABLEM ANZEIGEBEREICH UND VERFAHREN ZUM VARIABLEN BETRIEB EINES ASPEKTVERHÄLTNISSES UNTER VERWENDUNG EINES APP-SYMBOLS
DISPOSITIF ÉLECTRONIQUE COMPORTANT UN AFFICHAGE À ZONE D'AFFICHAGE VARIABLE ET PROCÉDÉ PERMETTANT DE FAIRE VARIER UN RAPPORT D'ASPECT AU MOYEN D'UNE ICÔNE D'APPLICATION

(30) Priority: 11.11.2020 KR 20200150070
(43) Date of publication of application: 26.07.2023
(73) Proprietor: Samsung Electronics Co., Ltd., Suwon-si, Gyeonggi-do 16677 (KR)
(72) Inventor: LEE, Seo, Suwon-si, Gyeonggi-do 16677 (KR); LEE, Sangchul, Suwon-si, Gyeonggi-do 16677 (KR); LEE, Seungchan, Suwon-si, Gyeonggi-do 16677 (KR); LIM, Seokjin, Suwon-si, Gyeonggi-do 16677 (KR); JANG, Wonkyung, Suwon-si, Gyeonggi-do 16677 (KR)
(74) Representative: Gulde & Partner
(86) International application number: PCT/KR2021/016452
(87) International publication number: WO 2022/103174

(56) References cited:
- EP-A2- 2 431 870
- EP-A2- 2 648 087
- KR-A- 20110 125 900
- KR-A- 20130 016 329
- KR-A- 20140 146 992
- KR-A- 20200 075 809
- KR-B1- 102 090 964
- KR-B1- 102 155 708
- US-A1- 2014 245 203
- US-A1- 2016 313 893
- US-A1- 2017 147 189
- US-A1- 2019 261 519

## Description

### [Technical Field]

Various embodiments relate to an electronic device including a display with a variable display area, and a method for variably operating an aspect ratio by using an app icon.

### [Background Art]

Electronic devices may include a display that displays visual information. According to the development of display technology, flexible displays are being released, and are being used in production of electronic devices (e.g., a foldable device, a rollable device, and a slidable device) having a variable display area.

Meanwhile, with the introduction of various types or sizes of displays, visual information (e.g., applications or contents) provided via electronic devices are also made to be output at various aspect ratios. For example, applications or contents may be made to be displayed at various aspect ratios (e.g., 4:3 and 16:9) according to graphics performance or a display status.

In US 2019/0261519 A1, an electronic device and method are disclosed. The electronic device includes a first and second housing movable relative to each other. The second housing supports a flexible display which may be at least partially exposed to an exterior, and at least partially stowed within the first housing based on the movement of the housings. A processor implements the method including detecting movement of the housings such that a visible display area of the display is changed, detecting whether the resizing meets a predetermined condition, and if resizing does not meet the predetermined condition, executing image processing on a portion of the resized visible display area.

A method and a device for executing an application are disclosed in EP 2 648 087 A2. The method comprises displaying an object on a display and receiving a user input related to the object. In response to the user input the object is enlarged. An application corresponding to the object is executed as the object is enlarged.

A mobile terminal and a method of controlling the mobile terminal are described in EP 2 431 870 A2. The mobile terminal displays an application on a home screen and executes the application upon shifting to a page of the home screen on which the application is arranged. The mobile terminal changes display characteristics of an item arranged on the home screen in response to a drag input for the item.

According to US 2017/0147189 A1, a flexible display device is provided. The flexible display device includes a display extendable from the device; a sensor to detect extended amount of the display; and a controller configured to cause the display to display a home screen on a pre-extension display region, which is a region of the display that is visible prior to extending of the display; cause the display to display a folder including an application icon corresponding to an application, wherein the folder and the application icon arc displayed on the pre-extension display region; detect, via the sensor, extension of the display; and cause the display to display the folder enlarged and the application icon enlarged on an extended display region, which is a region of the display that is visible after extending of the display.

### [Disclosure Invention]

### [Technical Problem]

However, in a case where a display disposed to have a fixed size and ratio (or the area of display) on an electronic device is different from an aspect ratio of visual information, in some cases, visual information may be partially cut and displayed, or may be displayed with a reduced size in a margin area (e.g., a pillar box or a letter box).

On the contrary, a flexible display transformable to have various sizes and ratios (or the area of display) itself may be changed to correspond to various aspect ratios, and thus different configurations of an aspect ratio for applications or contents may be possible. However, a user is required to change an aspect ratio or a resolution through a configuration item according to applications or contents one by one, which may be a hassle.

Various embodiments are to propose an electronic device and a method, wherein an electronic device including a display with a variable display area may variably operate an aspect ratio and/or a resolution for each content or application.

### [Solution to Problem]

The invention is set out in the appended set of claims, wherein the figures and respective description relate to advantageous embodiments thereof.

An electronic device according to various embodiments comprises: a first housing; a second housing arranged movably in a first direction or a second direction with respect to the first housing; a driving device driven to move the second housing with respect to the first housing; a display which has a first display area when the second housing is moved with respect to the first housing in the first direction and which is changed to a second display area extended beyond the first display area when the second housing is moved from the first housing in the second direction by the driving device; and a processor operatively coupled to the display and the driving device, wherein the processor is configured to: drive the driving device such that, in response to a request to execute an app icon displayed on the display, when the app icon, the execution of which is requested, has a first size, an app execution screen is displayed in a first aspect ratio or at a first resolution on the display of the first display area, and when the app icon has a second size, on the basis of a second aspect ratio and a second resolution which are set to correspond to the second size, the display is changed to the second display area; and control to display the app execution screen on the display extended to the second display area, in the second aspect ratio or at the second resolution.

A method of variably operating an aspect ratio by using an app icon of an electronic device according to various embodiment comprises: displaying an app icon on a display that has a first display area in case that a second housing is moved in a first direction with respect to a first housing, and is configured to be changeable to a second display area expanded greater than the first display area in case that the second housing is moved in a second direction from the first housing by a driving device, in response to a request of executing the app icon displayed on the display, determining a size of the app icon, the execution of which is requested, in case that the app icon has a first size, displaying an app execution screen at a first aspect ratio or a first resolution on the display of the first display area, in case that the app icon has a second size, based on a second aspect ratio and a second resolution configured to correspond to the second size, changing the display to the second display area; and displaying an app execution screen at the second aspect ratio or the second resolution on the display expanded to the second display area.

### [Advantageous Effects of Invention]

According to various embodiments, the size of an app icon displayed on a display is adjusted to change an aspect ratio or a resolution, whereby a user may visually recognize an aspect ratio or a resolution for each content or application.

According to various embodiments, when an app is executed, a display area of a display included in an electronic device is automatically changed, based on the size of an app icon, whereby an app execution screen may be displayed at an optimal aspect ratio and resolution.

### [Brief Description of Drawings]

Fig. 1 is a block diagram illustrating an electronic device in a network environment according to an embodiment of the disclosure.
FIG. 2A is a front perspective view of an electronic device 200 in a closed state according to an embodiment.
FIG. 2B is a rear perspective view of the electronic device 200 in a closed state according to an embodiment.
FIG. 3A is a front perspective view of the electronic device 200 in an open state according to an embodiment.
FIG. 3B is a rear perspective view of the electronic device 200 in an open state according to an embodiment.
FIG. 4 is an exploded perspective view of the electronic device 200 of FIG. 2A according to an embodiment.
FIG. 5A to FIG. 5C are diagrams showing the difference between sizes and ratios of a display area of a display in electronic devices according to various embodiments.
FIG. 6 is a diagram illustrating a method for configuring an aspect ratio by using an app icon in an electronic device according to an embodiment.
FIG. 7 illustrates aspect ratio configuration screens using an app icon according to an embodiment.
FIG. 8 is a diagram illustrating a method for variably operating an aspect ratio by using an app icon in an electronic device according to an embodiment.
FIG. 9 illustrates screens variably operating an aspect ratio by using an app icon in an electronic device according to an embodiment.
FIG. 10 is a diagram illustrating a method for variably operating an aspect ratio by using an app icon in an electronic device according to an embodiment.
FIG. 11 illustrates screens variably operating an aspect ratio by using an app icon in a rollable electronic device.
FIG. 12 is a diagram illustrating a method for variably operating an aspect ratio by using an app icon in an electronic device according to an embodiment.
FIG. 13A and FIG. 13B illustrate screens variably operating an aspect ratio by using an app icon in an electronic device according to an embodiment.
FIG. 14 illustrates screens variably operating an aspect ratio by using an app icon in an electronic device according to an embodiment.

### [Mode for the Invention]

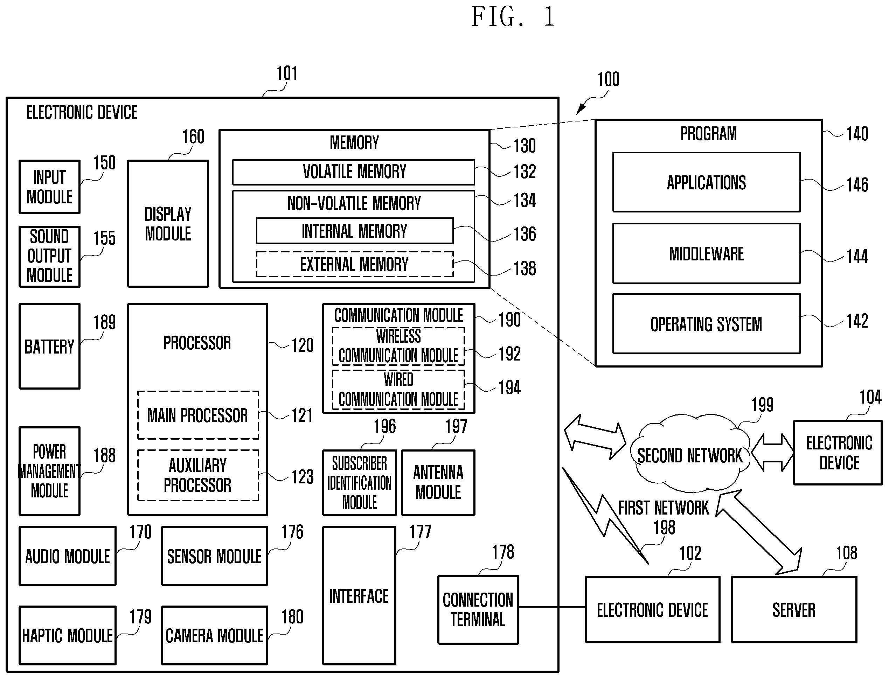

Fig. 1 is a block diagram illustrating an electronic device in a network environment according to an embodiment of the disclosure.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch..

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector.

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC)

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

The electronic device 101 according to an embodiment may be a flexible (or rollable or slidable) electronic device implemented as a flexible display in which a display area (or the area of display) displaying visual information is reducible or expandable according to transformation of a structure or a state of the display. The electronic device 101 may be implemented as various types of devices having a display function, such as a monitor and TV.

According to an embodiment, the electronic device 101 may include a driving device 185 (or a rotation assembly or a sliding motor) for ejecting or retracting at least a part of a flexible display from or into an internal space of a housing of the electronic device.

According to an embodiment, the processor 120 may receive various information measured via the sensor module 176 to detect a state change (e.g., a change in a display area or the area of display) of the display.

According to an embodiment, the processor 120 may control the driving device 185 by means of external force. When the driving device 185 operates by means of external force, the processor 120 may allow the electronic device 101 to be switched (e.g., a semi-automatic sliding operation) from a closed state to an open state, or from an open state to a closed state due to an elastic structure of the driving device 185 with no more external force.

According to another embodiment, when a signal generated via an input device (e.g., a hardware button or a software button provided through the screen) is generated, the processor 120 may allow the electronic device 101 to be switched from a closed state to an open state, or from an open state to a closed state by the driving device 185.

According to yet another embodiment, when a signal is generated from the sensor module 176, the electronic device 101 may control the driving device 185 such that the electronic device 101 is switched from a closed state to an open state, or from an open state to a closed state. For example, the electronic device 101 may detect, via the sensor module 176, a squeeze gesture indicating that a part (e.g., the palm or a finger) of a hand presses the electronic device 101 within a designated section thereof when the electronic device 101 is carried or held by the hand, and accordingly, may be switched from a closed state to an open state, or from an open state to a closed state.

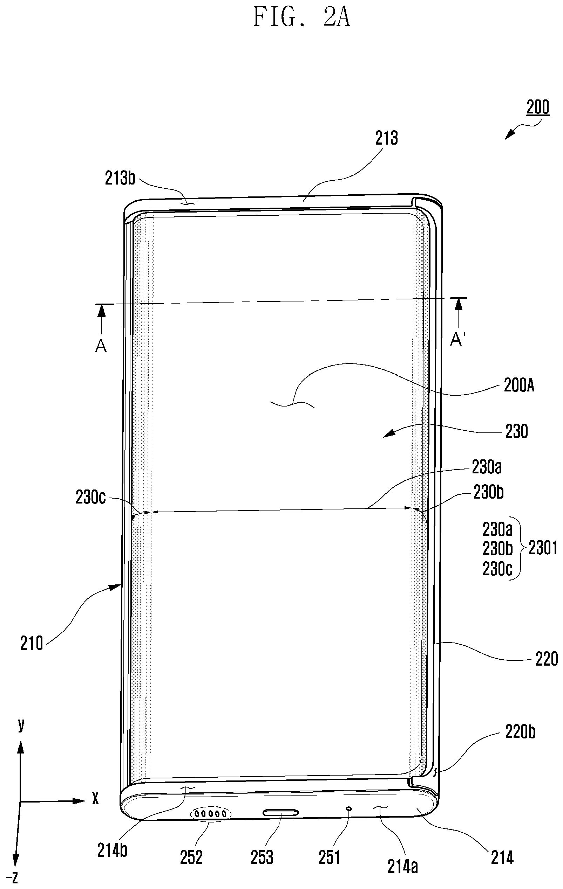

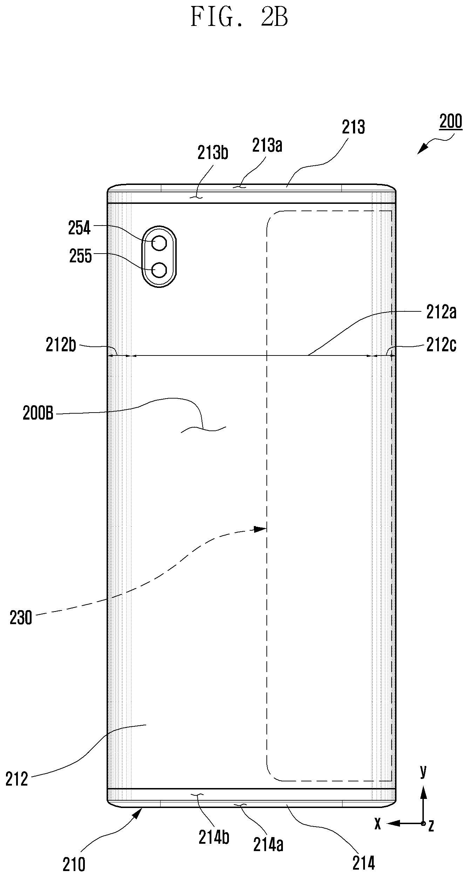

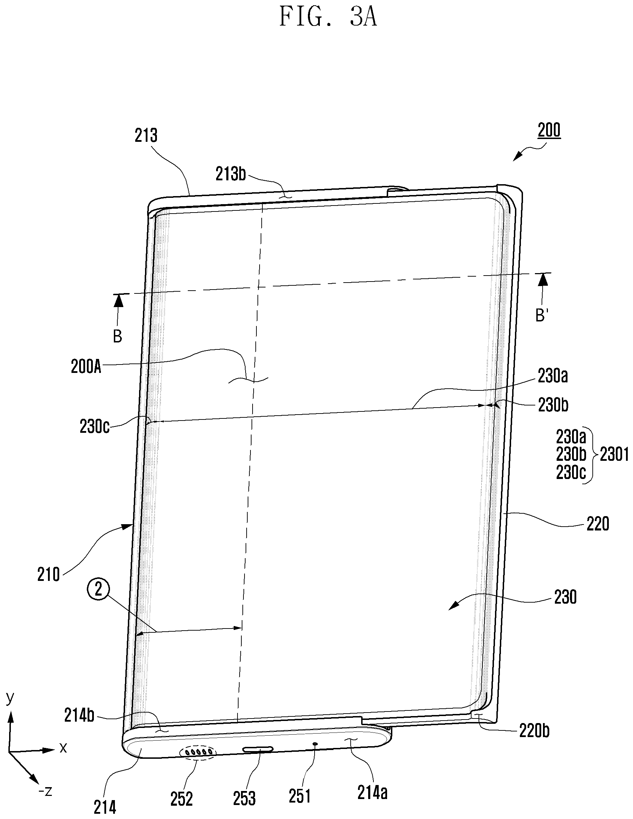

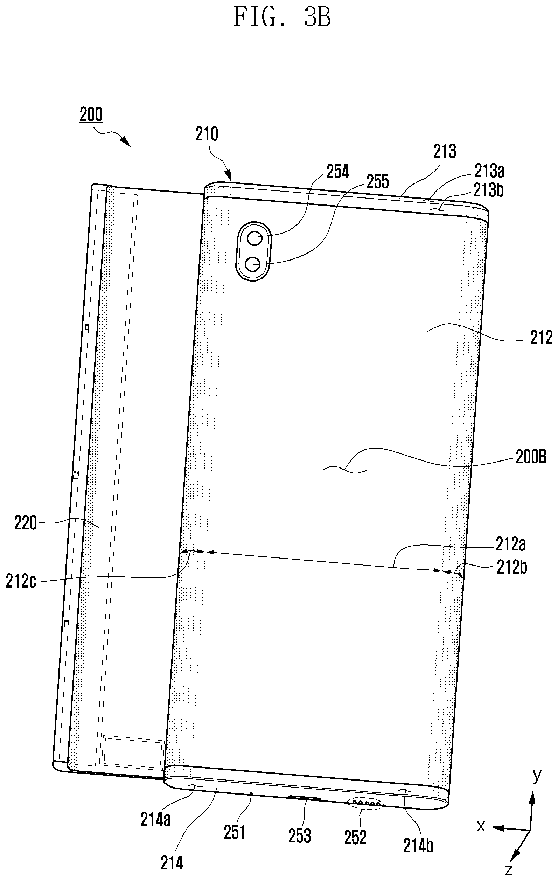

FIG. 2A is a front perspective view of an electronic device 200 in a closed state according to an embodiment. FIG. 2B is a rear perspective view of the electronic device 200 in a closed state according to an embodiment. FIG. 3A is a front perspective view of the electronic device 200 in an open state according to an embodiment. FIG. 3B is a rear perspective view of the electronic device 200 in an open state according to an embodiment.

According to various embodiments, the electronic device 200 in FIG. 2A may include the electronic device 101 in FIG. 1.

Referring to FIG. 2A, 2B, 3A, and 3B, in an embodiment, the electronic device 200 may be implemented to expand a screen 2301 in a sliding manner. For example, the screen 2301 may be an area of a flexible device 230 seen to the outside. FIG. 2A and FIG. 2B illustrate the electronic device 200, the screen 2301 of which is not expanded, and FIG. 3A and FIG. 3B illustrate the electronic device 200, the screen 2301 of which is expanded. A state where the screen 2301 is not expanded is a state where a sliding plate 220 for a sliding motion of the display 230 is not slid out, and may be called a "closed state" hereinafter. A state where the screen 2301 is expanded is a maximally expanded state where there is no more expansion of the screen 2301 caused by a slide-out of the sliding plate 220, and may be called an "open state" hereinafter. For example, a slide-out may be at least a partial movement of the sliding plate 220 in a first direction (e.g., a +x-axis direction) when the electronic device 200 is switched from a closed state to an open state. According to various embodiments, the open state may be defined as a state where the screen 2301 is expanded compared to the closed state, and may provide various screen sizes according to a movement position of the sliding plate 220. According to various embodiments, an intermediated state may indicate a state between the closed state of FIG. 2A and the open state of FIG. 3A. The screen 2301 may include an active area of the flexible display 230, which is visually exposed to enable image output, and the electronic device 200 may adjust the active area according to a movement of the sliding plate 220 or a movement of the flexible display 230. In the following description, the open state may indicate a state where the screen 2301 is maximally expanded. In an embodiment, the flexible display 230 that is disposed on the electronic device 200 in FIG. 2A so as to be slidable and provides the screen 2301 may also be called a "slide-out display" or an "expandable display".

According to an embodiment, the electronic device 200 may include a sliding structure related to the flexible display 230. For example, when the flexible display 230 is moved by a configured distance due to external force, a closed state or an open state may be switched to an open state or a closed state with no more external force due to an elastic structure included in the sliding structure (e.g., a semi-automatic sliding operation).

According to an embodiment, when a signal is generated via an input device included in the electronic device 200, the electronic device 200 may be switched from a closed state to an open state, or from an open state to a closed state by a driving device (e.g., the driving device 185 in FIG. 1) such as a motor connected to the flexible display 230. For example, when a signal is generated through a hardware button or a software button provided through the screen, the electronic device 200 may be switched from a closed state to an open state, or from an open state to a closed state.

According to various embodiments, when a signal is generated from various sensors such as a pressure sensor, the electronic device 200 may be switched from a closed state to an open state, or from an open state to a closed state. For example, a squeeze gesture indicating that a part (e.g., the palm or a finger) of a hand presses the electronic device 200 within a designated section thereof may be detected via a sensor when the electronic device 200 is carried or held by the hand, and accordingly, the electronic device 200 may be switched from a closed state to an open state or from an open state to a closed state.

According to an embodiment, the display 230 may include a second section ② (see FIG. 3A). The second section ② may include an expanded part of the screen 2301 when the closed state of the electronic device 200 is switched to the open state. When the electronic device 200 is switched from a closed state to an open state, the second section ② may slide to be ejected from an internal space of the electronic device 200, and thus the screen 2301 may be expanded. When the electronic device 200 is switched from an open state to a closed state, at least a part of the second section ② may slide to be retracted into the internal space of the electronic device 200, and thus the screen 2301 may be reduced. When the electronic device 200 is switched from an open state to a closed state, at least a part of the second section ② may be bent to be moved into the internal space of the electronic device 200. For example, the flexible display 230 may include a flexible substrate (e.g., a plastic substrate) made of a polymer material including polyimide (PI) or polyester (PET). The second section ② is a part of the flexible display 230 bent when the electronic device 200 is switched between an open state and a closed state, and for example, may be called a bendable section. In the following description, the second section ② will be called a bendable section.

According to an embodiment, the electronic device 200 may include a housing 210, the sliding plate 220, or the flexible display 230.

The housing (or case) 210 may include, for example, a back cover 212, a first side cover 213, or a second side cover 214. The back cover 212, the first side cover 213, or the second side cover 214 may be connected to a support member (not illustrated) positioned in the electronic device 200, and may configure at least a part of an exterior of the electronic device 200.

The back cover 212 may be configure, for example, at least a part of a rear surface 200B of the electronic device 200. In an embodiment, the back cover 212 may be substantially opaque. For example, the back cover 212 may be made of, for example, coated or colored glass, ceramic, polymer, metal (e.g., aluminum, stainless steel (STS), or magnesium), or a combination of two or more of the materials. According to an embodiment, in a state where the bendable section ② of the flexible display 230 is retracted into an interval space of the housing 210 (e.g., a closed state), at least a part of the bendable section ② may be disposed to be visible through the back cover 212 from the outside. In this case, the back cover 212 may be made of a transparent material and/or a translucent material.

According to an embodiment, the back cover 212 may include a flat part 212a and curved parts 212b and 212c positioned on opposite sides of the flat part 212a. The curved parts 212b and 212c are configured to be adjacent to relatively long both edges (not illustrated) of the back cover 212, respectively, and may seamlessly extend by being bent toward the screen positioned opposite to the back cover 212. According to an embodiment, the back cover 212 may be implemented to include one of the curved parts 212b and 212c or implemented without the curved parts 212b and 212c.

According to an embodiment, the first side cover 213 and the second side cover 214 may be positioned opposite to each other. For example, the first side cover 213 and the second side cover 214 may be positioned on opposite sides of the flexible display 230 in a second direction (e.g., a y-axis direction) orthogonal to the first direction (e.g., the +x-axis direction) of a slide-out of the sliding plate 220. The first side cover 213 may configure at least a part of a first side surface 213a of the electronic device 200, and the second side cover 214 may configure at least a part of a second side surface 214a of the electronic device 200 oriented in a direction opposite to the first side surface 213a. The first side cover 213 may include a first border part (or a first rim) 213b extending from an edge of the first side surface 213a. For example, the first border part 213b may configure at least a part of a one-side bezel of the electronic device 200. The second side cover 214 may include a second border part (or a second rim) 214b extending from an edge of the second side surface 214a. For example, the second border part 214b may configure at least a part of the other-side bezel of the electronic device 200. According to an embodiment, in a closed state of FIG. 2A, a surface of the first border part 213b, a surface of the second border part 214b, and a surface of the sliding plate 220 may be connected smoothly to configure a one-side curved part (not illustrated) corresponding to a first curved part 230b of the screen 2301. According to various embodiments, the surface of the first border part 213b or the surface of the second border part 214b may include the other-side curved part (not illustrated) corresponding to a second curved part 230c of the screen 2301 positioned opposite to the first curved part 230b.

According to an embodiment, the sliding plate 220 may perform a sliding motion on a support member (not illustrated) positioned in the electronic device 200. At least a part of the flexible display 230 may be disposed on the sliding plate 220, and the closed state of FIG. 2A or the open state of FIG. 3A may be made based on the position of the sliding plate 220 on the support member. According to an embodiment, the flexible display 230 may be attached to the sliding plate 120 through a bonding member (or an adhesive member) (not illustrated). According to an embodiment, the bonding member may include a thermo-reactive bonding member, a photo-reactive bonding member, a normal bonding agent, and/or double-sided tape. According to an embodiment, the flexible display 230 may be inserted into a recess disposed on the sliding plate 220 in a sliding manner and disposed on and fixed to the sliding plate 220. The sliding plate 220 functions to support at least a part of the flexible display 230, and in an embodiment, may be called a display support structure.

According to an embodiment, the sliding plate 220 may include a third border part 220b configuring an outer surface (e.g., a surface exposed to the outside to configure an exterior of the electronic device 200) of the electronic device 200. For example, the third border part 220b may configure a bezel around the screen together with the first border part 213b and the second border part 214b in the closed state of FIG. 2A. The third border part 220b may extend in the second direction (e.g., the y-axis direction) to connect one end of the first side cover 213 and one end of the second side cover 214 in a closed state. For example, in the closed state of FIG. 2A, a surface of the third border part 220b may be smoothly connected to the surface of the first border part 213b and/or the surface of the second border part 214b.

According to an embodiment, due to a slide-out of the sliding plate 220, at least a part of the bendable section ② may exit from the inside of the electronic device 200, and thus an expanded state (e.g., an open state) of the screen 2301 as shown in FIG. 3A may be provided.

According to an embodiment, in the closed state of FIG. 2A, the screen 2301 may include a flat part 230a and the first curved part 230b and/or the second curved part 230c positioned on opposite sides of the flat part 230a. For example, the first curved part 230b and the second curved part 230c may be substantially symmetrical with respect to the flat part 230a. For example, in the closed state of FIG. 2A, the first curved part 230b and/or the second curved part 230c may be positioned to correspond to the curved parts 212b and 212c of the back cover 212, respectively, and may be bent toward the back cover 212. When the closed state of FIG. 2A is switched to the open state of FIG. 3A, the flat part 230a may be expanded. For example, a partial area of the bendable section ② configuring the second curved part 230c in the closed state of FIG. 2A may be included in the expanded flat part 230a when the closed state of FIG. 2A is switched to the open state of FIG. 3A, and may be configured as a different area of the bendable section ②.

According to an embodiment, the electronic device 200 may include an opening (not illustrated) for retracting or ejecting the bendable section ② and/or a pulley (not illustrated) positioned at the opening. The pulley may be positioned to correspond to the bendable section ②, and a movement of the bendable section ② and a movement direction thereof may be guided through rotation of the pulley during switching between the closed state of FIG. 2A and the open state of FIG. 3A. The first curved part 230b may be configured to correspond to a curved surface on one surface of the sliding plate 220. The second curved part 230c may be configured by a part corresponding to a curved surface of the pulley in the bendable section ②. The first curved part 230b is positioned opposite to the second curved part 230c in a closed state or an open state of the electronic device 200 so as to improve the beauty of the screen 2301. According to an embodiment, the expanded flat part 230a may be implemented without the first curved part 230b.

According to an embodiment, the flexible display 230 may further include a touch sensing circuit (e.g., a touch sensor). According to various embodiments (not illustrated), the flexible display 230 may be coupled to or disposed to be adjacent to a touch sensing a pressure sensor capable of measuring the strength (pressure) of a touch, and/or a digitizer that detects an input device (e.g., a stylus pen) using a magnetic field scheme. For example, the digitizer may include a coil member disposed on a dielectric substrate to detect an electromagnetic induction type resonant frequency applied from a pen input device.

According to an embodiment, the electronic device 200 may include a microphone hole 251 (e.g., the input module 150 in FIG. 1), a speaker hole 252 (e.g., the sound output module 155 in FIG. 1), a connector hole 253 (e.g., the connection terminal 178 in FIG. 1), a camera module 254 (e.g., the camera module 180 in FIG. 1), or a flash 255. According to various embodiments, the flash 255 may be implemented to be included in the camera module 254. In an embodiment, the electronic device 200 may omit at least one of elements or additionally include other elements.

The microphone hole 251 may be, for example, configured on at least a part of the second side surface 214a to correspond to a microphone (not illustrated) positioned in the electronic device 200. The position of the microphone hole 251 may be various without being limited to the embodiment of FIG. 2a. According to an embodiment, the electronic device 200 may include multiple microphones capable of detecting the direction of a sound.

The speaker hole 252 may be, for example, configured on at least a part of the second side surface 214a to correspond to a speaker positioned in the electronic device 200. The position of the speaker hole 252 may be various without being limited to the embodiment of FIG. 2a. According to various embodiments, the electronic device 200 may include a call receiver hole. In an embodiment, the microphone hole 251 and the speaker hole 252 may be implemented as one hole, or the speaker hole 252 may be omitted like a piezo speaker.

The connector hole 253 may be, for example, configured on at least a part of the second side surface 214a to correspond to a connector (e.g., a USB connector) positioned in the electronic device 200. The electronic device 200 may transmit and/or receive power and/or data with an external electronic device electrically connected to the connector through the connector hole 253. The position of the connector hole 253 may be various without being limited to the embodiment of FIG. 2a.

The camera module 254 and the flash 255 may be positioned on, for example, the rear surface 200B of the electronic device 200. The camera module 154 may include one or multiple lenses, an image sensor, and/or an image signal processor. The flash 255 may include, for example, a light emitting diode or a xenon lamp. In an embodiment, two or more lenses (an infrared camera, and wide-angle and telephoto lenses) and image sensors may be positioned on one surface of the electronic device 200. According to various embodiments, without being limited to the embodiment of FIG. 2B or FIG. 3B, the electronic device 200 may include multiple camera modules. The camera module 254 may be one of the multiple camera modules. For example, the electronic device 200 may include multiple camera modules (e.g., a dual camera or a triple camera) having different attributes (e.g., a field of view) or functions. For example, there may be multiple camera modules (e.g., the camera module 254) including lenses having different fields of view, and the electronic device 200 may control to change the field of view of a camera module performed in the electronic device 200, based on a user's selection. In addition, multiple camera modules may include at least one of a wide-angle camera, a telephoto camera, a color camera, a monochrome camera, or an infrared (IR) camera (e.g., a time-of-flight (TOF) camera, or a structured light camera). According to an embodiment, the IR camera may be operated as at least a part of a sensor module (not illustrated).

According to various embodiments (not illustrated), the electronic device 200 may further include a camera module (e.g., a front camera) that generates an image signal, based on light received through one surface (e.g., a front surface 200A) of the electronic device 200 placed in a direction the screen 2301 faces. For example, the camera module 254 may not be limited to the embodiment of FIG. 2B or FIG. 3B, and may be positioned in the housing 210 in alignment with an opening (e.g., a through hole or a notch) configured on the flexible display 230. The camera module 254 may receive light through the opening and a partial area of a transparent cover overlapping with the opening, to generate an image signal. The transparent cover functions to protect the flexible display 230 from the outside, and for example, may include a material such as polyimide or ultra-thin class (UTG).

According to an embodiment, without being limited to the embodiment of FIG. 2B or FIG. 3B, the camera module 254 may be disposed under at least a part of the screen 2301 of the flexible display 230, and may perform a relevant function (e.g., image capturing) without visual distinguishment (or exposure) of the position of the camera module 254. In this case, for example, when viewed from above the screen 2301 (e.g., when view in the -z-axis direction), the camera module 254 may be disposed to overlap with at least a part of the screen 2301 and thus may obtain an image of an external object without being exposed to the outside.

According to various embodiments (not illustrated), the electronic device 200 may further include a key input device (e.g., the input module 150 in FIG. 1). The key input device may be, for example, positioned on the first side surface 213a of the electronic device 200 configured by the first side cover 213. In an embodiment (not illustrated), the key input device may include at least one sensor module.

According to various embodiments (not illustrated), the electronic device 200 may include various sensor modules (e.g., the sensor module 176 in FIG. 1). The sensor module may generate an electrical signal or a data value corresponding to an internal operation state or an external environment state of the electronic device 200. For example (not illustrated), the sensor module may include a proximity sensor that generates a signal related to proximity of an external object, based on light received through the front surface 200A of the electronic device 200 placed in a direction the screen 2301 faces. As another example (not illustrated), the sensor module may include various biometric sensors, such as a fingerprint sensor or an HRM sensor for detecting biometric information, based on light received through the front surface 200A or the rear surface 200B of the electronic device 200. The electronic device 200 may include at least one of various other sensor modules, for example, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

According to various embodiments, without being limited to the embodiment of FIG. 2A, FIG. 2B, FIG. 3A, and FIG. 3C, the electronic device 200 may be implemented in a structure the screen is expanded at the third border part 220b when the sliding plate 220 is slid out. For example, a partial area of the flexible display 230 configuring the first curved part 230b in the closed state of FIG. 2A may be included in the expanded flat part 230a when the closed state of FIG. 2A is switched to the open state of FIG. 3A, and may be configured as a different area of the flexible display 230.

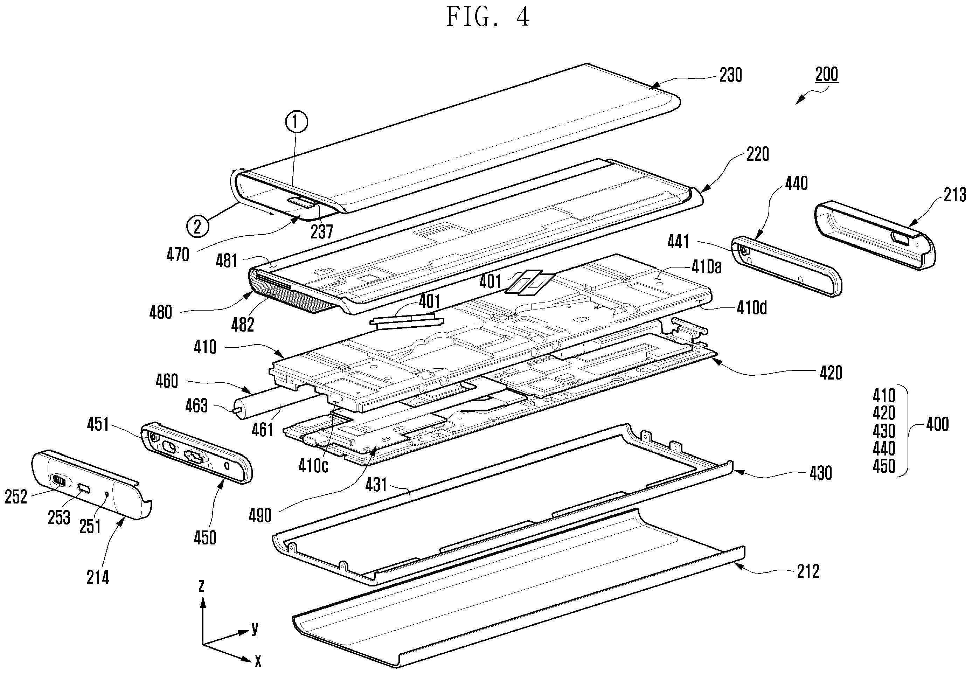

FIG. 4 is an exploded perspective view of the electronic device 200 of FIG. 2A according to an embodiment.

Referring to FIG. 4, in an embodiment, the electronic device 200 may include the back cover 212, the first side cover 213, the second side cover 214, a support member assembly 400, a pulley 460, the sliding plate 220, the flexible display 230, a support sheet 470, a multi-bar structure (or multi-bar assembly) 480, or a printed circuit board 490 (e.g., a printed circuit board (PCB), a flexible PCB (FPCB), or a rigid-flexible PCB (RFPCB)). An overlapped description for some of the reference numerals of FIG. 4 is omitted.

According to an embodiment, the support member assembly (or support structure) 400 is a frame structure that is able to withstand a load, and may contribute to the durability and stiffness of the electronic device 200. At least a part of the support member assembly 400 may include a non-metallic material (e.g., polymer) or a metallic material. The housing 210 (see FIG. 2A) including the back cover 212, the first side cover 213, or the second side cover 214, the pulley 460, the sliding plate 220, the flexible display 230, the support sheet 470, the multi-bar structure 480, or the printed circuit board 490 may be disposed at or coupled to the support member assembly 400.

According to an embodiment, the support member assembly 400 may include a first support member 410, a second support member 420, a third support member 430, a fourth support member 440, or a fifth support member 450.

The first support member 410 (or a first bracket) 410 may be, for example, a plate type. The sliding plate 220 may be disposed on one surface 410a of the first support member 410. The second support member (or a second bracket) 420 may be, for example, a plate type overlapping with at least a part of the first support member 410 when viewed in the z-axis direction, or may be coupled to the first support member 410 and/or the third support member 430. The second support member 420 may be positioned between the first support member 410 and the third support member 430. The third support member 430 may be coupled to the second support member 420 and/or the first support member 410 while the second support member 420 is interposed between the first support member and the third support member. The printed circuit board 490 may be disposed on the second support member 420 between the first support member 410 and the second support member 420. The fourth support member 440 may be coupled to one side of an assembly (or structure) (not illustrated) in which the first support member 410, the second support member 420, and the third support member 430 are coupled. The fifth support member 450 may be coupled to the other side of an assembly (or structure) (not illustrated) in which the first support member 410, the second support member 420, and the third support member 430 are coupled, and may be positioned opposite to the fourth support member 440. The first side cover 213 may be coupled to the support member assembly 400 at the side of the fourth support member 440. The second side cover 214 may be coupled to the support member assembly 400 at the side of the fifth support member 450. The back cover 212 may be coupled to the support member assembly 400 at the side of the third support member 430. At least a part of the first support member 410, the second support member 420, the third support member 430, the fourth support member 440, or the fifth support member 450 may include a metallic material and/or a non-metallic material (e.g., polymer). According to various embodiments, two or more of the first support member 410, the second support member 420, the third support member 430, the fourth support member 440, and the fifth support member 450 may be integrally implemented. According to an embodiment, the support member assembly 400 may also indicate a structure configuring at least a part of a first support member 410, a second support member 420, a third support member 430, a fourth support member 440, and a fifth support member 450. According to an embodiment, a part of the first support member 410, the second support member 420, the third support member 430, the fourth support member 440, and the fifth support member 450 may be omitted.

The first support member 410 may include, for example, a first side surface (not illustrated) facing the fourth support member 440, a second side surface 410c facing the fifth support member 450 and positioned opposite to the first side surface, a third side surface (not illustrated) connecting one end of the first side surface and one end of the second side surface 410c, or a fourth side surface 410d connecting the other end of the first side surface and the other end of the second side surface 410c and positioned opposite to the third side surface. According to an embodiment, the pulley 460 may be positioned near the third side surface of the first support member 410. As another example, in a case where a direction of a slide-out of the electronic device is configured to be opposite, the pulley 460 may be positioned near the fourth side surface 410d of the first support member 460. The pulley 460 may include a roller 461 being a cylinder type extending in a direction (e.g., the +y-axis direction) going from the fifth support member 450 to the fourth support member 440. The pulley 460 may include a first rotation shaft (not illustrated) and a second rotation shaft 463 connected to the roller 461, and the first rotation shaft and the second rotation shaft 463 may be positioned to be opposite to each other while the roller 461 is interposed therebetween. The first rotation shaft may be positioned between the roller 461 and the first side cover 213, and may be connected to the fourth support member 440. The second rotation shaft 463 may be positioned between the roller 461 and the second side cover 214, and may be connected to the fifth support member 450. The fourth support member 440 may include a first through hole 441 into which the first rotation shaft is inserted, and the fifth support member 450 may include a second through hole 451 into which the second rotation shaft 463 is inserted. The roller 461 may be rotatable, based on the first rotation shaft disposed in the fourth support member 440 and the second rotation shaft 463 disposed in the fifth support member 450.

According to an embodiment, the sliding plate 220 may be disposed at the support member assembly 400 so as to be slidable on the first support member 410. For example, a sliding structure may be disposed between the first support member 410 and the sliding plate 220 so as to be coupled to each other and to support and guide a movement of the sliding plate 220. According to an embodiment, the sliding structure may include at least one elastic structure 401. When the sliding plate 220 is moved by a configured distance due to external force, the closed state in FIG. 2A or the open state in FIG. 3A may be switched to the open state or the closed state with no more external force due to the at least one elastic structure 401. The at least one elastic structure 401 may include, for example, various elastic members such as a torsion spring. For example, a torsion spring as the elastic structure 401 may include one end connected to the sliding plate 220, the other end connected to the first support member 410, and a spring part between the one end and the other end. When the sliding plate 220 is moved in a first direction (e.g., the +x-axis direction) of a slide-out by a configured distance due to external force, the position of the one end relative to the other end is changed, and thus the sliding plate 220 may be moved in the first direction due to elasticity of the spring part with no more external force, whereby the closed state in FIG. 2A or may be switched to the open state in FIG. 3A. When the sliding plate 220 is moved in a second direction (e.g., the -x-axis direction) opposite to the first direction by a configured distance due to external force, the position of the one end relative to the other end is changed, and thus the sliding plate 220 may be moved in the second direction due to elasticity of the spring part with no more external force, whereby the open state in FIG. 3A may be switched to the closed state in FIG. 2A.

According to various embodiments, the housing 210 may be defined to further include at least a part of the support member assembly 400. For example, the housing 210 may include one surface (e.g., the one surface 410a configured by the first support member 410) oriented in a first direction (e.g., a +z direction) and the other surface (e.g., the rear surface 200B of FIG. 2B) oriented in a second direction (e.g., a -z-axis direction) opposite to the first surface 410a. The display support structure 220 may be disposed on the one surface (e.g., the one surface 410a configured by the first support member 410) of the housing 210, so as to be slidable in a third direction (e.g., the +x-axis direction) perpendicular to the first direction. According to an embodiment, the flexible display 230 may include a first section ① extending from the bendable section ②. The first section ① may be disposed on the sliding plate 220. When the closed state in FIG. 2A is switched to the open state in FIG. 3A, the bendable section ② connected to the first section ① may slide to go outside due to a movement of the sliding plate 220, thereby expanding a screen (see the screen 2301 in FIG. 3A). When the closed state in FIG. 2A is switched to the open state in FIG. 3A, the bendable section ② may at least partially enter into the electronic device 200 due to a movement of the sliding plate 220, thereby reducing a screen (see the screen 2301 in FIG. 2A). The support member assembly 400 may include an opening (not illustrated) for retracting or ejecting the bendable section ②, and the pulley 460 may be positioned at the opening. The opening may include a one-side gap between the first support member 410 and the third support member 430, and a part 431 of the third support member 430 adj acent to the opening may have a curved shape corresponding to a curved surface of the roller 461. The pulley 460 may be positioned to correspond to the bendable section ②, and the pulley 460 may be rotated due to a movement of the bendable section ② during switching between the closed state of FIG. 2A and the open state of FIG. 3A.

According to an embodiment, the support sheet 470 may be attached to include a rear surface of the flexible display 230. The rear surface of the flexible display 230 may indicate a surface positioned opposite to a surface through which light is emitted from a display panel including multiple pixels. The support sheet 470 may contribute to the durability of the flexible display 230. The support sheet 470 may reduce the effect of, on the flexible display 230, a load or stress which may occur during switching between the closed state of FIG. 2A and the open state of FIG. 3A. The support sheet 470 may prevent the flexible display 230 from being damaged due to force transferred from the sliding plate 220 when same is moved. Although not illustrated, the flexible display 230 may include a first layer including multiple pixels and a second layer coupled to the first layer. The first layer may include, for example, a light emitting layer (e.g., a display panel) including multiple pixels implemented by a light emitting element, such as an organic light emitting diode (OLED) or a micro light emitting diode (LED), and various other layers (e.g., an optical layer for improving the screen quality of the screen or improving outdoor visibility, for example, a polarizing layer). According to an embodiment, the optical layer may allow selective passage of light that is generated from a light source of the light emitting layer and vibrates in a predetermined direction. According to an embodiment, when viewed from above the screen 2301 (e.g., when viewed in the -z-axis direction), multiple pixels may not be arranged in a partial area of the flexible display 230, at least partially overlapping with at least one electronic component (e.g., a camera module or a sensor module) included in the electronic device 200. According to an embodiment, when viewed from above the screen 2301, a partial area of the flexible display 230, at least partially overlapping with at least one electronic component (e.g., a camera module or a sensor module) included in the electronic device 200, may include a pixel structure and/or a wiring structure different from that of the other area. For example, a partial area of the flexible display 230, at least partially overlapping with the at least one electronic component (e.g., a camera module or a sensor module), may have a pixel density different from that of the other area. For example, a partial area of the flexible display 230, at least partially overlapping with the at least one electronic component (e.g., a camera module or a sensor module), may be implemented as a substantially transparent area by changing a pixel structure and/or a wiring structure even without including an opening. The second layer may include various layers for a role (e.g., a cushioning member (a cushion)) of supporting and protecting the first layer, a role of blocking light, a role of absorbing or shielding electromagnetic waves, or a role of diffusing, dispersing, or dissipating heat. According to an embodiment, at least a part of the second layer is a conductive member (e.g., a metal plate), and may assist in reinforcing the stiffness of the electronic device 200, may block surrounding noise, and may be used to disperse heat released from a surrounding heat releasing component (e.g., a display drive circuit). According to an embodiment, the conductive member may include at least one of copper (Cu), aluminum (Al), stainless steel (SUS), or CLAD (e.g., a stacked member in which SUS and Al are alternately arranged).

The support sheet 470 may at least partially cover the second layer of the flexible display 230 and may be attached to a rear surface of the second layer. The support sheet 470 may be made of various metallic materials and/or non-metal materials (e.g., polymer). According to an embodiment, the support sheet 470 may include stainless steel. According to an embodiment, the support sheet 470 may include engineering plastic. According to an embodiment, the support sheet 470 may be implemented to be integrated with the flexible display 230. According to an embodiment, the support sheet 470 may include a lattice structure (not illustrated) at least partially overlapping with a part (e.g., the bendable section ② in FIG. 3A or FIG. 4, or the first curved part 230b in FIG. 2A or FIG. 3A) on which the flexible display 230 is disposed to be bent. The lattice structure may include multiple openings or multiple slits, and contribute to the flexuosity of the flexible display 230. According to various embodiments, the support sheet 470 may include a recess pattern (not illustrated) including multiple recesses in replacement of the lattice structure, and the recess pattern may contribute to the flexuosity of the flexible display 230. According to various embodiments, the lattice structure or the recess pattern may be expanded to at least a part of the flat part 230a of FIG. 2A or FIG. 3A. According to various embodiments, the support sheet 470 including the lattice structure or the recess pattern, or the conductive member corresponding thereto may be configured by multiple layers.

According to an embodiment, the multi-bar structure 480 may be connected to the sliding plate 220, and may include a first surface 481 facing the support sheet 470 and a second surface 482 positioned opposite to the first surface 481. At the time of a movement of the sliding plate 220, the movement and the direction of the multi-bar structure 480 may be guided by the roller 461 rotating due to the friction with the second surface 482. According to an embodiment, the second surface 482 may include an arrangement of multiple bars (not illustrated) extending in a direction (e.g., the +y-axis direction) going from the second rotation shaft 463 of the pulley 460 to the first rotation shaft (not illustrated). The multi-bar structure 480 may be bent in parts having a relatively thin thickness between the multiple bars. In various embodiments, this multi-bar structure 480 may be called other terms such as a "flexible track" or a "hinge rail".

According to an embodiment, in the closed state in FIG. 2A or the open state in FIG. 3A, at least a part of the multi-bar structure 480 may be positioned to overlap with the screen 2301 (see FIG. 2A or FIG. 3A), and may support the bendable section ② so that the bendable section ② of the flexible display 230 is maintained to be smoothly connected to the first section ① of the flexible display 230 without lifting. The multi-bar structure 480 may contribute to the bendable section ② to be movable while maintaining smooth connection with the first section ① without lifting during switching between the closed state of FIG. 2A and the open state of FIG. 3A.

According to an embodiment, the support sheet 470 may allow elements (e.g., the multi-bar structure 380) positioned in the electronic device 200 not to be substantially seen through the flexible display 230.

In a state where the screen is expanded (e.g., the open state in FIG. 3A), a non-smooth screen may be provided due to lifting caused by elasticity of the flexible display 230 and/or the support sheet 470. According to various embodiments, in order to prevent same, a tension structure (not illustrated) for the flexible display 230 and/or the support sheet 470 may be configured. The tension structure may contribute to a smooth sliding operation with tension.

According to an embodiment, a processor (e.g.., the processor 120 in FIG. 1), a memory (e.g., the memory 130 in FIG. 1), and/or an interface (e.g., the interface 177 in FIG. 1) may be mounted on the printed circuit board 490. The processor may include, for example, one or more of a central processing device, an application processor, a graphics processing device, an image signal processor, a sensor hub processor, or a communication processor.

The memory may include, for example, a volatile memory or a nonvolatile memory. The interface may include, for example, a high-definition multimedia interface (HDMI), a universal serial bus (USB) interface, an SD card interface, and/or an audio interface. The interface may, for example, electrically or physically connect the electronic device 200 to an external electronic device, and may include a USB connector, an SD card/MMC connector, or an audio connector.

The electronic device 200 may include various other elements arranged on the printed circuit board 490 or electrically connected to the printed circuit board 490. For example, the electronic device 200 may include a battery (not illustrated) positioned between the first support member 410 and the second support member 420 or between the second support member 420 and the back cover 212. The battery (not illustrated) is a device configured to supply power to at least one element of the electronic device 200, and may include, for example, a non-rechargeable primary battery, a rechargeable secondary battery, or a fuel cell. The battery (not illustrated) may be integrally disposed in the electronic device 200, or may be disposed to be detachable or attachable from or to the electronic device 200. According to an embodiment, the electronic device 200 may include an antenna (not illustrated) positioned between the first support member 410 and the second support member 420 or between the second support member 420 and the back cover 212. The antenna (not illustrated) may include, for example, a near field communication (NFC) antenna, a wireless charging antenna, and/or a magnetic secure transmission (MST) antenna. The antenna (not illustrated) may, for example, perform near field communication with an external device, or wirelessly transmit or receive power required for charging. In another embodiment, an antenna structure may be configured by a part of the first side cover 213 and/or the second side cover 214, or a combination thereof.

According to an embodiment, the electronic device 200 may include a flexible printed circuit board (FPCB) 237 electrically connecting the flexible display 230 and the printed circuit board 490. For example, the flexible printed circuit board 237 may be electrically connected to the printed circuit board 490 through an opening (not illustrated) disposed on the sliding plate 220 and an opening (not illustrated) disposed on the first support member 410.

Hereinafter, various structures to which the electronic device 101 is applied will be described.

The electronic device 101 according to various embodiments may have various types of housing structures so that a display area of the display 230 is variable. Electronic devices may have different sizes and ratios of a display or a display area in a first state (e.g., a closed state) and a second state (e.g., an open state). For example, the electronic device 101 having a housing structure illustrated in FIG. 2A and FIG. 3A may have a ratio of 21:9 in the first state and have a ratio of 4:3 in the second state.

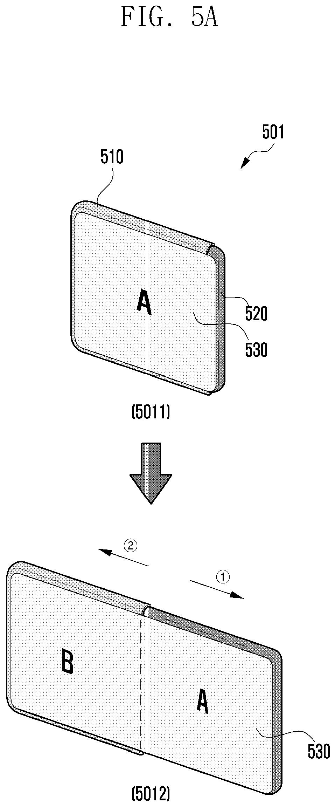

FIG. 5A to FIG. 5C are diagrams showing the difference between sizes and ratios of a display area of a display in electronic devices according to various embodiments.

A first electronic device 501 having a housing structure illustrated in FIG. 5A may be implemented to be slidable in a single direction. For example, in a case of the first electronic device 501, a display area (e.g., A area) of a display 530 may have a ratio of 4:3 in the first state as shown in view <5011>, and the display area (e.g., an A+B area) of the display 550 may be expanded to a ratio of 21:9 in the second state as shown in view <5012>. When a second housing 520 is slid with respect to a first housing 510 in a single direction (e.g., a first direction ①) at the time of switching of the first electronic device 501 from the first state to the second state, at least a part (e.g., a B area) of the display 530 accommodated in the first housing 510 is ejected and thus the display area of the display 530 may be expanded. When a second housing 520 is slid with respect to the first housing 510 in a second direction ② at the time of switching of the first electronic device 501 from the second state to the first state, a part (e.g., a B area) of the display is retracted into the first housing 510 and thus the display area of the display 530 may be reduced.

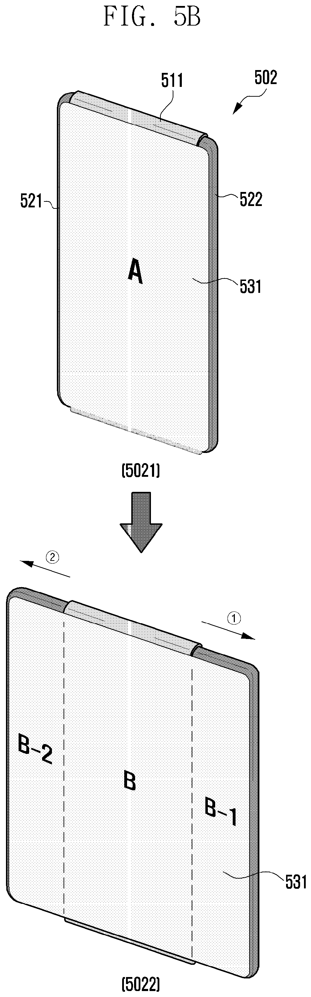

A second electronic device 502 having a housing structure illustrated in FIG. 5B may be implemented to be slidable in both directions. For example, in a case of the second electronic device 502, a display area (e.g., A area) of a display 531 may have a ratio of 21:9 in the first state as show in view <5012>, and the display area (e.g., an A+(B-1)+(B-2) area) of the display 531 may be expanded to a ratio of 4:3 in the second state as shown in view <5022>. When a second housing 521 and a third housing 522 are slid with respect to a first housing 511 in both directions, for example, a first direction ① and a second direction ②, respectively, at the time of switching of the second electronic device 502 from the first state to the second state, a part (B-1) of the display accommodated in the first housing 511 is ejected in the first direction ①, and another part (B-2) is ejected in the second direction ②, and thus the display area of the display 531 may be expanded. Although not illustrated in the drawing, in the second electronic device 502, only a part of the display 531 may be expanded in the first direction ① (e.g., an A+(B-1) area), or only a part of the display 531 may be expanded in the second direction ② (e.g., an A+(B-2) area).

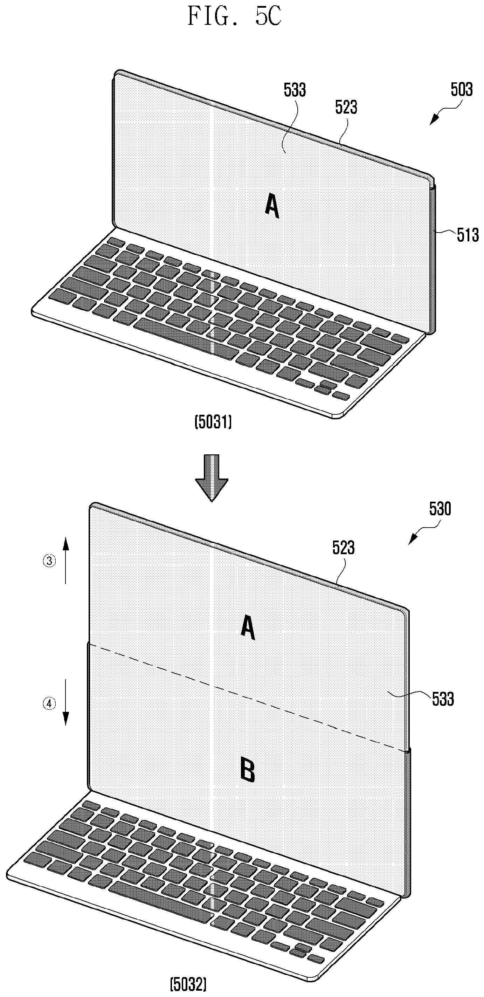

A third electronic device 503 having a housing structure illustrated in FIG. 5C may be implemented to be slidable in a rolling up/down manner. In a case of the third electronic device 503, a display area (e.g., A area) of a display 533 may have a ratio of 21:9 in the first state as shown in view <5013>, and the display area (e.g., an A+B area) of the display 533 may have a ratio of 4:3 in the second state as shown in view <5022>. When a second housing 523 is rolled with respect to a first housing 513 in an upward direction (e.g., ③) at the time of switching of the third electronic device 503 from the first state to the second state, a part B of the display accommodated in the first housing 513 is ejected in the upward direction ③ and thus the display area of the display 533 may be expanded. When the second housing 523 is rolled down respect to the first housing 513 in a downward direction (e.g., ④) at the time of switching of the third electronic device 503 from the second state to the first state, a part (e.g., a B area) of the display is retracted into the first housing 513 and thus the display area of the display 533 may be reduced.

Hereinafter, a display ratio may be understood as a width-to-height ratio of a display area (or the area of display) in which information is displayed in a display of an electronic device, or a width-to-height ratio of a physical size of a display in which a current screen of an electronic device is displayed.

An aspect ratio may mean a ratio between the width and height of visual information (or a screen frame) related to an application or a content.

An electronic device (e.g., the electronic device 101 in FIG. 1, the electronic device 200 in FIG. 2A and FIG. 2B, the electronic device 200 in FIG. 3A and FIG. 3B, the electronic device 200 in FIG. 4, the first electronic device 501 in FIG. 5A, the second electronic device 502 in FIG. 5B, or the third electronic device 503 in FIG. 5C) according to various embodiments may include a first housing (e.g., the first housing 210 in FIG. 2A and FIG. 2B, the first housing 510 in FIG. 5A, the first housing 521 in FIG. 5B, or the first housing 531 in FIG. 5C), a second housing (e.g., the second housing 220 in FIG. 2A and FIG. 2B, the second hosing 510 in FIG. 5A, the first housing 511 in FIG. 5B, or the first housing 5131 in FIG. 5C) disposed to be movable in a first direction or a second direction with respect to the first housing, a driving device (e.g., the driving device 185 in FIG. 1) configured to be driven to move the second housing with respect to the first housing, a display (e.g., the display module 160 in FIG. 1, the display 230 in FIG. 2A and FIG. 2B, the display 230 in FIG. 3A and FIG. 3B, the display 230 in FIG. 4, the display 530 in FIG. 5A, the display 531 in FIG. 5B, or the display 533 in FIG. 5C) having a first display area in case that the second housing is moved in the first direction with respect to the first housing, and configured to be changed to a second display area expanded greater than the first display area in case that the second housing is moved in the second direction from the first housing by the driving device, and a processor (e.g., the processor 120 in FIG. 1) operatively connected to the display and the driving device, wherein the processor is configured to, in response to a request of executing an app icon displayed on the display, in case that the app icon, the execution of which is requested, has a first size, display an app execution screen at a first aspect ratio or a first resolution on the display of the first display area, and in case that the app icon has a second size, based on a second aspect ratio and a second resolution configured to correspond to the second size, drive the driving device to change the display to the second display area, and control to display an app execution screen at the second aspect ratio or the second resolution on the display expanded to the second display area.

The app icon according to various embodiments may be displayed on a home screen or a wallpaper, the first size may be a size displayed by default on a home screen in case that an application is installed, and the second size may be a size configured to be different in a widthwise direction or a heightwise direction of the first size.

The processor according to various embodiments may be configured to control the driving device to make the second display area of the display have a ratio identical to the second aspect ratio or second resolution.

The processor according to various embodiments may be configured to, in relation to the app icon displayed on the home screen, detect an aspect ratio configuration request input, display an icon ratio configuration user interface (UI), based on the aspect ratio configuration input, display, on the home screen, an app icon having a changed size according to a user input based on the icon ratio configuration user interface, and change an application configuration to at least one of an aspect ratio or a resolution corresponding to the size change of the app icon.

The icon ratio configuration user interface according to various embodiments may be configured to display a guide box, a size of which is adjustable to overlap with at least a part of a selected app icon, or display multiple aspect ratio configuration items.

The processor according to various embodiments may be configured to provide an app icon having different sizes and shapes for each aspect ratio or resolution.

The processor according to various embodiments may be configured to, in a state where an app execution screen is displayed on the display of the first display area, detect an event of the display being expanded from the first display area to the second display area, and change and display the app execution screen to have an aspect ratio corresponding to a ratio of the expanded second display area.

The processor according to various embodiments may be configured to, at the time of the app execution termination in a state where the app execution screen is displayed at a changed aspect ratio to correspond to a ratio of the expanded second display area, display a guidance user interface of requesting whether to store the changed aspect ratio, in case that a user input of not storing the changed aspect ratio is detected via the guidance user interface, store an app icon at the first size having been configured by default in relation to an app configuration, and in case that a user input of storing the changed aspect ratio is detected via the guidance user interface, store an app icon at the second size having a changed aspect ratio to correspond to a ratio of the second display area.

The processor according to various embodiments may be configured to, in response to the request of executing the app icon, compare an aspect ratio configured for the app icon with a display ratio of a display area displaying current visual information, and in case that the display ratio is different from the aspect ratio, drive the driving device to make the display ratio be identical to the aspect ratio configured for the app icon.

The processor according to various embodiments may be configured to detect an input of merging a first app icon having the first size and a second app icon having the second size and a changed screen configuration on the home screen, generate and display, based on the input of merging, an integrated folder accommodating the first app icon and the second app icon, and change the first app icon accommodated in the integrated folder to have a ratio identical to an aspect ratio of the second app icon.

The processor according to various embodiments may be configured to, generate an integrated folder on the home screen, and adjust a size of the integrated folder, based on an input of adjusting the integrated folder to the second size, and based on accommodating a first app icon in the integrated folder having the adjusted size, change an aspect ratio related to the first app icon to an aspect ratio or a resolution corresponding to the size of the integrated folder.

The processor according to various embodiments may be configured to display, on the home screen, a multi-icon in which a first app icon and a second app icon are merged, control the driving device in response to a request of executing the multi-icon, to expand the display to the second display area, and display a multi-view including a first window corresponding to the first app icon and a second window corresponding to the second app icon on the display of the second display area, wherein, in case that the first window is configured to have the first aspect ratio, the second window is changed according to the first aspect ratio.

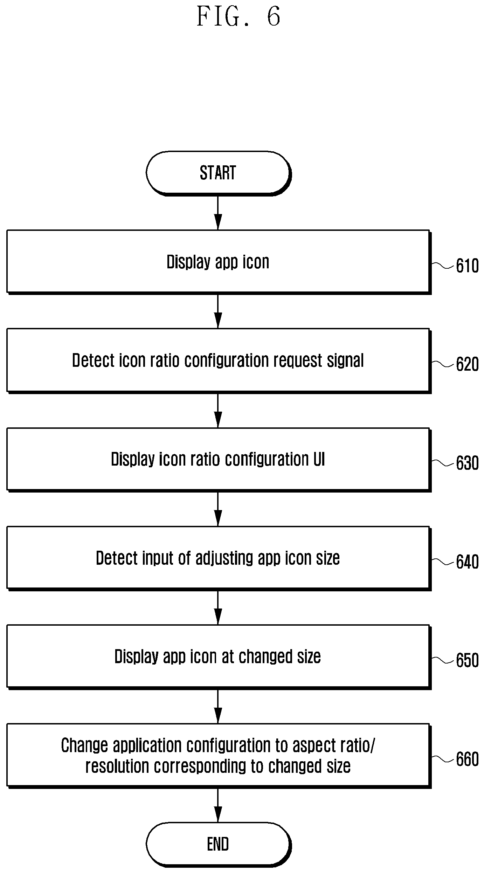

FIG. 6 is a diagram illustrating a method for configuring an aspect ratio by using an app icon in an electronic device according to an embodiment.

Referring to FIG. 6, according to an embodiment, in operation 610, a processor (e.g., the processor 120 in FIG. 1) of the electronic device 101 displays at least one app icon on a display (e.g., the display module 160 in FIG. 1). For example, the processor 120 may display, on a home screen or a wallpaper, at least one app icon related to an application (or an application program). The app icon may be an object or a widget.

For example, the app icon may be displayed, on a home screen, at a first size designated by default when an application is installed in the electronic device. For example, the first size may be a 1*1 size.

In operation 620, the processor 120 may detect an icon ratio configuration request signal related to the application. For example, in a case where a user selects the app icon displayed on the display in a configured input manner (e.g., long press), the processor 120 may detect an app icon ratio configuration request signal.

In operation 630, the processor 120 may display an icon ratio configuration user interface (UI).

According to an embodiment, the processor 120 may provide a guide box, the size of which is controllable to overlap with the selected app icon.

According to an embodiment, the processor 120 may provide aspect ratio configuration items (e.g., a 4:3 item, a 16:9 item, and a 21:9 item) at a position at which the items at least partially overlap with the selected app icon.

In operation 640, the processor 120 may detect an input of changing an app icon size to change an aspect ratio.

For example, in a case where an adjustable guide box is provided to the app icon, a user may adjust (e.g., a drag input) the size of the guide box to adjust (or change) the size of the app icon.

As another example, in a case where ratio configuration items of the app icon are provided, a user may select (e.g., touch) one of the ratio configuration items provided on the screen.

In operation 650, the processor 120 may display, on the display, the app icon, the size of which has been changed based on a user input.

For example, in a case where a user selects the 16:9 item, the processor 120 may change and display the app icon to have a second size and a particular shape (form) corresponding to the 16:9 item. Alternatively, in a case where a user selects the 21:9 item, the processor 120 may change and display the app icon to have a second size and a particular shape corresponding to the 21:9 item. For example, the second size may be a 1*2 size, but is not limited thereto.

The processor 120 may represent the app icon having different sizes or shapes according to an aspect ratio difference.

In operation 660, the processor 120 may change an application configuration related to the app icon, based on at least one of a resolution or an aspect ratio corresponding to the changed size of the app icon. For example, in a case where a user changes the app icon displayed on the screen, to a size corresponding to the 16:9 item, the processor 120 may configure a 16:9 ratio as the aspect ratio output when the application related to the app icon is executed.

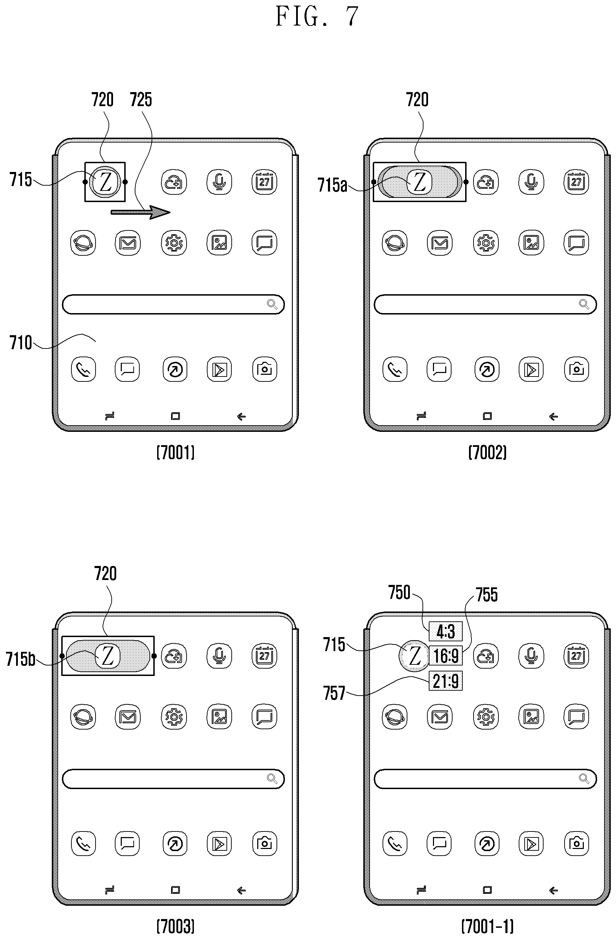

FIG. 7 illustrates aspect ratio configuration screens using an app icon according to an embodiment.

Referring to FIG. 7, according to an embodiment, a processor (e.g., the processor 120 in FIG. 1) of the electronic device 101 may detect an icon ratio configuration request signal related to an application in a home screen 710 of a display (e.g., the display module 160 in FIG. 1). For example, a user may touch and then long press an app icon 715.

The processor 120 may display a guide box 720, the size of which is adjustable, as an icon ratio configuration UI as shown in view <7001>. The user may recognize, through the guide box 720, that the size of the app icon is adjustable. App icons illustrated in view <7001> may have a first size, for example, a 1*1 size. When the app icon has a 1*1 size, the application may be executed (or configured) at a first aspect ratio (e.g., 4:3) or a first resolution configured in the electronic device 101 by default. The first aspect ratio or the first resolution may be different according to the type of the electronic device. For example, the first electronic device 501 in FIG. 5A may execute an application at a 4:3 ratio by default, but the second electronic device 502 in FIG. 5B may execute an application at a 21:9 ratio by default.

The user may select the guide box 720, and then adjust the size (e.g., a width-to-height ratio) of the app icon 715 through a drag input 725 moving in a first direction in order to change the aspect ratio of the application, as illustrated in view <7001>. For example, the user may increase a transverse line of the guide box 720 in the first direction.

The processor 120 may change and display the app icon 715 to have a second size and shape according to a size adjustment input.

According to an embodiment, the electronic device 101 may support the app icon having different shapes to be output according to the aspect ratio of the application changed in response to an icon size adjustment.

For example, in response to the drag input 725 in the first direction, the processor 120 may output an app icon shape 715a allowing change into a 16:9 aspect ratio, as illustrated in view <7002>. In a case where the user continues the drag input 725 in the first direction, the processor 120 may output an app icon shape 715b allowing change into a 21:9 aspect ratio, as illustrated in view <7003>. The user may identify a changed app icon shape (or size), and then select an aspect ratio to be changed when releasing the touch on the guide line 720.

In a case where the user releases the touch on the guide line 720 in view <7002>, the processor 120 may configure (or change) aspect ratio information so that a 16:9 aspect ratio is applied when the application is executed.

In a case where the user releases the touch on the guide line 720 in view <7003>, the processor 120 may configure (or change) aspect ratio information so that a 21:9 aspect ratio is applied when the application is executed.

According to an embodiment, in the electronic device 101, in a case where an app icon for configuration/execution at a 16:9 aspect ratio has the second size, an app icon for configuration/execution at a 21:9 aspect ratio may be changed to a third size relatively greater than the second size.

According to another embodiment, the electronic device may output aspect ratio configuration items (e.g., a 4:3 item, a 16:9 item, and a 21:9 item) as an icon ratio configuration UI, as illustrated in view <7001-1>. For example, in a case where a user selects the app icon 715 and then long presses same, the processor 120 may display a 4:3 item 750, a 16:9 item 755, and a 21:9 item 757 at the selected app icon 715. In a case where the user selects one of the items, the processor may change the app icon to have a shape and size corresponding to the selected aspect ratio item, and configure or change aspect ratio information so that the aspect ratio of the selected item is applied when the application is executed.

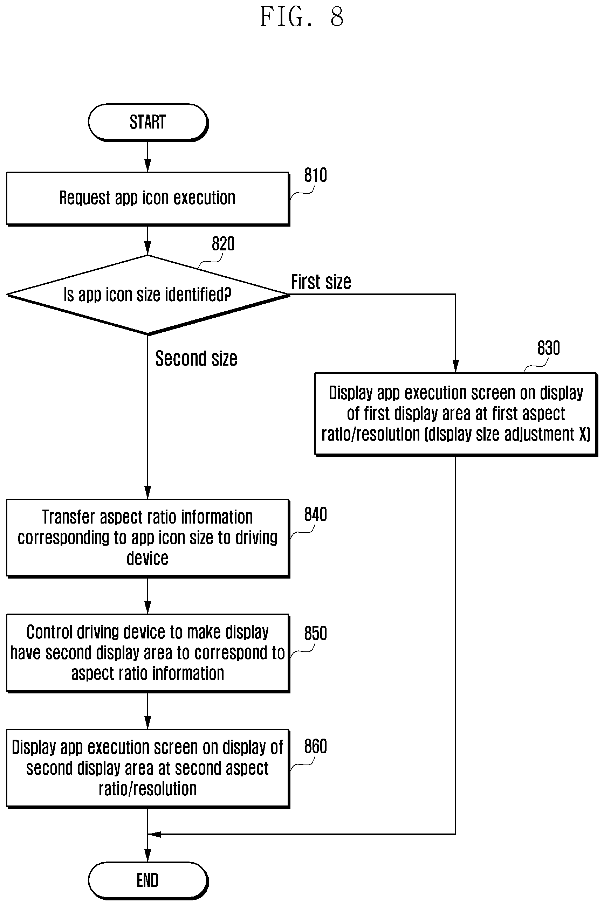

FIG. 8 is a diagram illustrating a method for variably operating an aspect ratio by using an app icon in an electronic device according to an embodiment.

Referring to FIG. 8, a processor (e.g., the processor 120 in FIG. 1) of the electronic device 101 according to an embodiment may, in operation 810, detect an app icon execution request related to an application installed in the electronic device 101.

According to an embodiment, the processor 120 may display an app icon corresponding to at least one application installed in the electronic device 101 on a display (e.g., the display module 160 in FIG. 1). When a user touches the app icon, an execution process of the application related to the touched app icon may be started. The app icon may be an object or a widget.

In operation 820, the processor 120 may identify the size of the app icon.

According to an embodiment, the processor 120 may identify whether the icon is an icon, for which the aspect ratio of the application has been changed according to a size change of the app icon.

In a case where the app icon, the execution of which is requested, has a first size, the processor 120 may proceed with operation 830, and in a case where the app icon has a second size, may proceed with operation 840. The first size may be a size (e.g., a 1*1 size) configured by default when the application is installed in the electronic device 101, and the second size may be a size (e.g., 1*2, 2*1, or 3*1) indicating width and height ratios being different, rather than the 1: 1 size.

In operation 830, in a case where the app icon, the execution of which is requested, has the first size, the processor 120 may display an app execution screen on the display having a first display area, based on at least one of a first aspect ratio and a first resolution. The first aspect ratio and the first resolution may be an aspect ratio configured by default according to the display of the electronic device. The processor 120 may execute the application related to the app icon, the execution of which is requested, without changing a display size or a display structure, and display an app execution screen on the current display, that is, the first display area.

The display having the first display area may be in a closed state. For example, in a case where the display in a closed state has a display ratio, that is, a 4:3 ratio of the first display area, an application screen or a content may be displayed at an aspect ratio of 4:3 when the application is executed.

In operation 840, in a case where the app icon, the execution of which is requested, has the second size, the processor 120 may transfer aspect ratio information corresponding to the app icon size to a driving device.

According to an embodiment, the processor 120 may obtain aspect ratio information from the application related to the app icon. The aspect ratio information may include the aspect ratio or the width and height, and/or dots per inch (DPI) information of visual information related to an application or a content. For example, in a case where the electronic device is an android system, the application may transfer aspect ratio information to a window manager included in an android framework layer, and the processor may identify the aspect ratio information via the window manager.

In operation 850, the processor 120 may control the driving device to make the display have a second display area to correspond to an aspect ratio configured based on the app icon.

According to an embodiment, the processor 120 may slide the display via the driving device to make the aspect ratio related to the app be the same as the display ratio. As the display is slid, the electronic device 101 may be changed so that the display has the second display area from the first display area.

For example, the display of the second display area may be in an open state or an intermediate state. The display in the open state or the intermediate state may have a second display ratio. For example, in the electronic device in a closed state, the display may have the first display area, and the first display area may have a 4:3 display ratio, and in the electronic device in an open state, the display may have a second display area, and the second display area may have a 21:9 display ratio.

In operation 860, the processor 120 may display an app execution screen on the display changed to the second display area, based on a second aspect ratio and a second resolution.

When an application related to a selected app icon is executed, the processor 120 may change a display area of the display, based on aspect ratio information of an aspect ratio based on an app icon size, and control an app execution screen to be displayed on the changed display area.

According to an embodiment, the electronic device 101 may identify a structure state of the display, and compare aspect ratio information configured in the app icon with a display ratio corresponding to the current display area of the display. In a case where a display ratio is different from an aspect ratio related to the application, the electronic device 101 may control the driving device to make the aspect ratio be the same as the display ratio, thereby changing a display area in which information is displayed on the display. When the display area of the display is changed, the display ratio may also be changed.

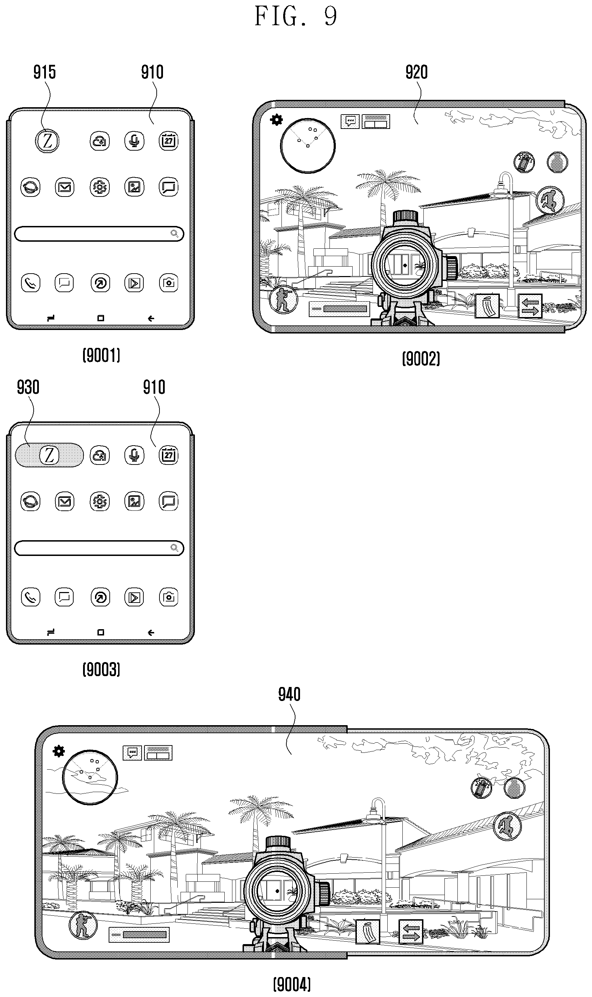

FIG. 9 illustrates screens variably operating an aspect ratio by using an app icon in an electronic device according to an embodiment.

Referring to FIG. 9, according to an embodiment, the electronic device 101 may automatically change a display area (or a display ratio) of a display at the time of execution of an application related to an app icon, based on the size of the app icon, and display an app execution screen at an aspect ratio or a resolution corresponding to the changed display area.

For example, a user may select (e.g., touch) a first app icon 915 displayed on a home screen 910 to request app execution, as illustrated in view <9001>. The first app icon 915 may be displayed at a first size configured by default.

The electronic device 101 may start an execution process of an application related to the first app icon 915 in response to an app execution request signal for the first app icon 915, and display an app execution screen 920 at a first aspect ratio configured by default, for example, a 4:3 aspect ratio, as illustrated in view <9002>.

The first app icon 915 has a size configured by default, and thus the electronic device 101 may display the app execution screen via a display (e.g., a first display area having a 4:3 ratio) in a closed state without changing a display ratio.

As another example, the user may select (e.g., touch) a second app icon 930 having a changed size to request app execution, as illustrated in view <9003>. The electronic device 101 may start an execution process of an application related to the second app icon 930 in response to an app execution request signal for the second app icon 930, identify aspect ratio information configured based on the second app icon 930, and control a driving device to change a display ratio.

The electronic device 101 may control the driving device to make an aspect ratio configured to correspond to the second app icon 930 having a changed size be the same as a display ratio, thereby changing a display area of the display as illustrated in view <9004>. For example, the electronic device 101 may change a closed state to an open state by means of driving of the driving device. The display in the open state may have a display area having a 21:9 ratio. The electronic device 101 may display an app execution screen on the display having a changed display area at a 21:9 aspect ratio.

The user may recognize the aspect ratio and resolution of the application through the size and shape of the app icon. The electronic device 100 may, without a separate configuration input, adjust the size of the app icon to change an aspect ratio, change a display area of the display to a display ratio corresponding to the changed aspect ratio, and then display an app execution screen in the changed display area.

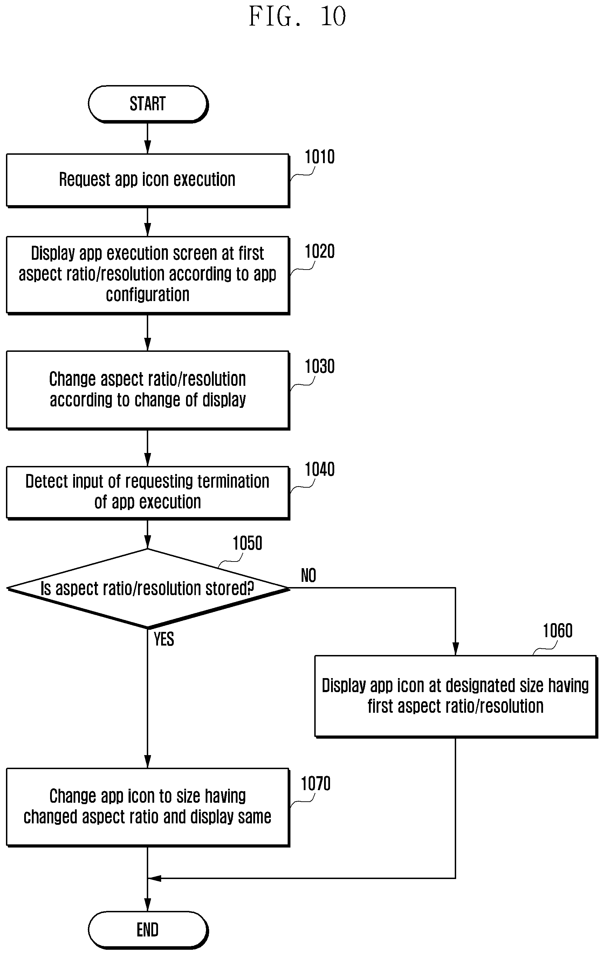

FIG. 10 is a diagram illustrating a method for variably operating an aspect ratio by using an app icon in an electronic device according to an embodiment.

Referring to FIG. 10, a processor (e.g., the processor 120 in FIG. 1) of the electronic device 101 according to an embodiment may, in operation 1010, detect a request to execute an app icon displayed on a display (e.g., the display module 160 in FIG. 1). For example, the processor 120 may detect selection (e.g., a touch) of an app icon displayed on a home screen.

In operation 1020, the processor 120 may execute an application related to the selected app icon in response to the app execution request and display an app execution screen. The processor 120 may display the app execution screen at a first aspect ratio/first resolution configured by default according to an app configuration.

The processor 120 may detect a change of a display area of the display.

According to an embodiment, the processor 120 may detect a degree of reduction/expansion of the display (or a housing accommodating the display), based on at least one sensor (e.g., a distance sensor and an expansion detection sensor) included in the electronic device 101. The electronic device 101 may identify a display area to display visual information, based on sensor information, and display visual information (e.g., a content or an execution screen) in the identified display area.

In operation 1030, the processor 120 may display the app while changing an aspect ratio and resolution thereof according to a change of the display area of the display.

For example, the processor 120 may identify a display ratio in a case where the display area of the display is changed. For example, when the electronic device is changed from a closed state to an open state, the display area of the display may be changed from a 4:3 ratio to a 21:9 ratio.

The processor 120 may change and display an app execution screen to have an aspect ratio corresponding to the changed display area.

In operation 1040, the processor 120 may detect an input of requesting termination of app execution. The processor 120 may detect an input of requesting termination of app execution in a state where the display area is changed.

In operation 1050, the processor 120 may provide a storage guidance user interface of asking whether to store the changed aspect ratio and resolution, based on the termination of app execution.

The processor 120 may compare an aspect ratio being displayed via the current display with an aspect ratio configured by default in relation to application execution, and if the ratios are different, may display a storage guidance UI on the display. The storage guidance UI may be provided as a pop-up window on an app execution screen. The storage guidance UI may include a message which notifies whether to perform storage, an approval item, and a refusal item.

In operation 1060, in a case where a user input of not storing the changed aspect ratio and resolution is detected, the processor 120 may display the app icon at a designated size (e.g., a first size, a default size, or a 1*1 size) having the first aspect ratio configured by default in relation to an app configuration.

In operation 1070, in a case where a user input of storing the changed aspect ratio and resolution is detected, the processor 120 may change and configure an app configuration to have a second aspect ratio and a second resolution, and change to and display a size (e.g., a second size or a 1*2 size) having the changed aspect ratio.

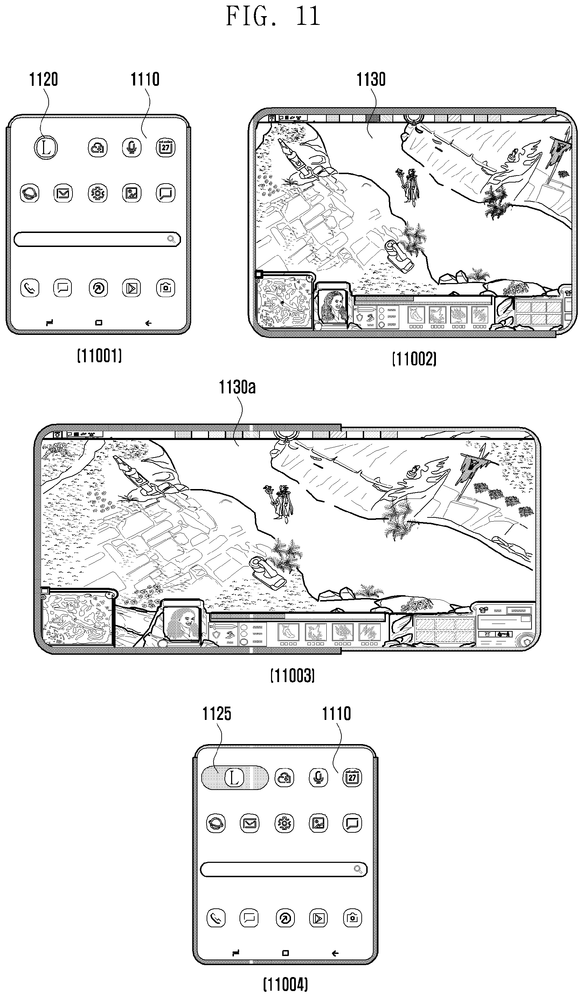

FIG. 11 illustrates screens variably operating an aspect ratio by using an app icon in a rollable electronic device.

Referring to FIG. 11, according to an embodiment, while an application is executed, the electronic device 101 may support a size change of an app icon in response to a change of a display area of a display.

For example, a user may select (e.g., touch) a first app icon 1120 displayed on a home screen 1110 to request app execution, as illustrated in view <11001>. The first app icon 1120 may be displayed at a first size configured by default. The electronic device 101 may display an app execution screen 1130 at a first aspect ratio configured in the electronic device 101 by default, for example, a 4:3 aspect ratio, as illustrated in view <11002>.

The user may slide the display to expand the display area of the display. For example, the display of the electronic device 101 may be changed from a closed state to an open state. For example, in the open state, the aspect ratio may be a 21:9 ratio.

The electronic device 101 may change to and display an app execution screen 1130a at an aspect ratio (e.g., a 21:9 ratio) corresponding the changed display area in response to the change of the display area of the display, as illustrated in view <11003>.

The user may request an input of storing the changed aspect ratio at the time of termination of app execution. The electronic device 101 may change (or configure) an app configuration to the currently change aspect ratio, based on a user input of requesting aspect ratio storage.

The electronic device 101 may return to the home screen 1110, based on an app execution termination request. The electronic device 101 may display an app icon 1125 changed to have a second size to correspond to the changed aspect ratio, as illustrated in view <11004>. The user may recognize that a screen having a 21:9 ratio is to be displayed when the corresponding application is executed, according to the app size change.

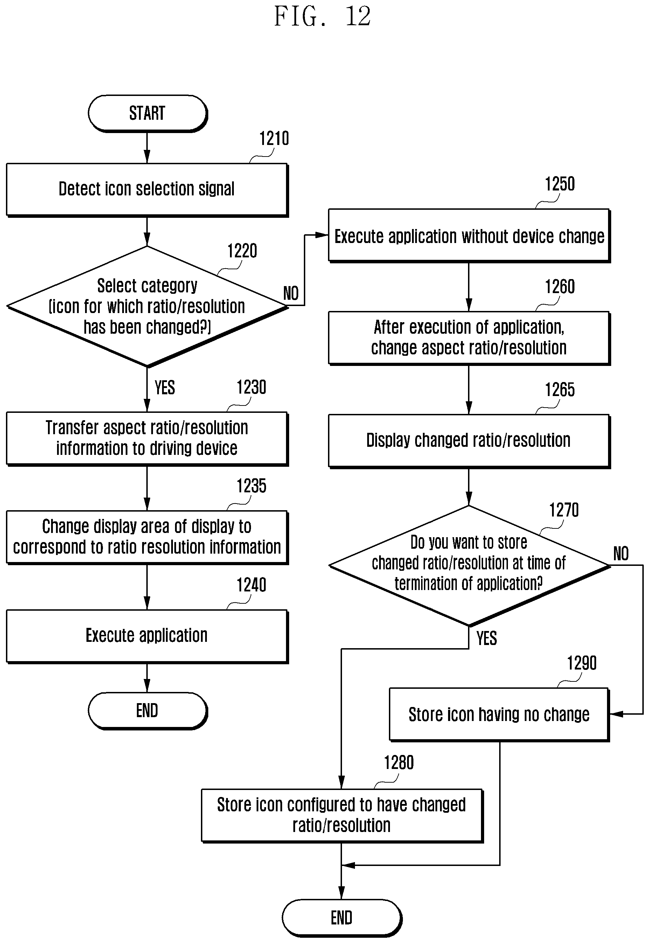

FIG. 12 is a diagram illustrating a method for variably operating an aspect ratio by using an app icon in an electronic device according to an embodiment.

Referring to FIG. 12, according to an embodiment, a processor (e.g., the processor 120 in FIG. 1) of the electronic device 101 may, in operation 1210, detect a signal for selecting an app icon related to an application installed in the electronic device.

In operation 1220, the processor 120 may determine an execution category for the selected app icon. For example, the processor 120 may determine an execution category according to whether the icon is an icon for which an aspect ratio/resolution has been changed, based on the app icon. Alternatively, the processor 120 may determine an execution category according to the size and shape of the selected app icon. In a case where the icon is not an icon for which a ratio/resolution has been changed (e.g., same is configured by default), the processor 120 may proceed with operation 1250, and in a case where the icon is an icon for which a ratio/resolution has been changed, the processor may proceed with operation 1230.

As another example, the processor 120 may identify an execution category according to the size of the app icon, in a case where the size of the app icon is a first size, may proceed with operation 1250, and in a case where the size of the app icon is a second size, may proceed with operation 1230.

In operation 1230, the processor 120 may transfer aspect ratio/resolution information corresponding to the app icon size to a driving device. In operation 1235, the processor 120 may control the driving device to change a display area of the display to correspond to an aspect ratio/resolution configured based on the app icon.

In operation 1240, the processor 120 may execute the application at an aspect ratio corresponding to the changed display area of the display, to display an app execution screen.

In operation 1250, in a case where the icon is not an icon for which an aspect ratio/resolution has been changed (e.g., same is configured by default), the processor 120 may execute the application at an aspect ratio configured by default without changing a display structure, to display an app execution screen.

In operation 1260, the processor 120 may execute the application and then detect a change of the aspect ratio and the resolution.

A user may change the display to an open state or an intermediate state to change the display area of the display. For example, when the user's touch input satisfies a designated condition, the electronic device 101 may drive the driving device to change the display area of the display. As another example, the electronic device 101 may drive the driving device by means of manipulation of a drive button (a drive key), to change the display area of the display.

In operation 1265, the processor 120 may display an app execution screen at a changed aspect ratio/resolution, based on the change of the display area of the display.

In operation 1270, the processor 120 may determine whether to store the changed aspect ratio and resolution at the time of termination of app execution.

For example, the processor 120 may provide a storage guidance UI of asking whether to store the changed aspect ratio and resolution, at the time of termination of app execution, and detect the user's approval or refusal input.

In operation 1280, in a case where a user input of storing the changed aspect ratio and resolution is detected, the processor 120 may store an app icon configured to have the changed aspect ratio and resolution. The app icon configured to have the changed aspect ratio and resolution may be displayed at the second size on a home screen.

In operation 1290, in a case where a user input of not storing the changed aspect ratio and resolution is detected, the processor 120 may not change the size of the icon, and store a default app icon. The default app icon may be displayed at the first size on a home screen.

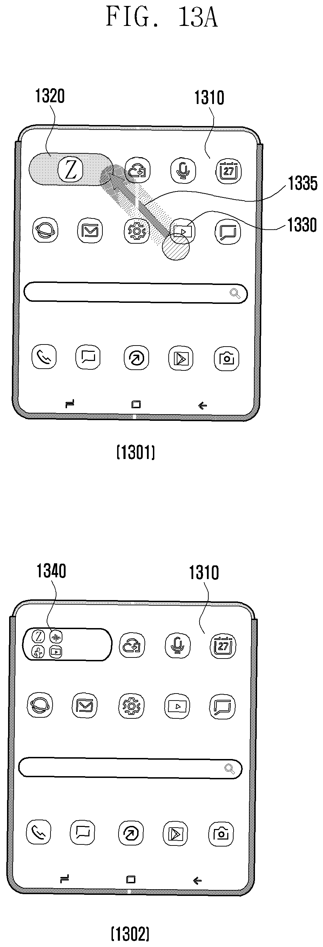

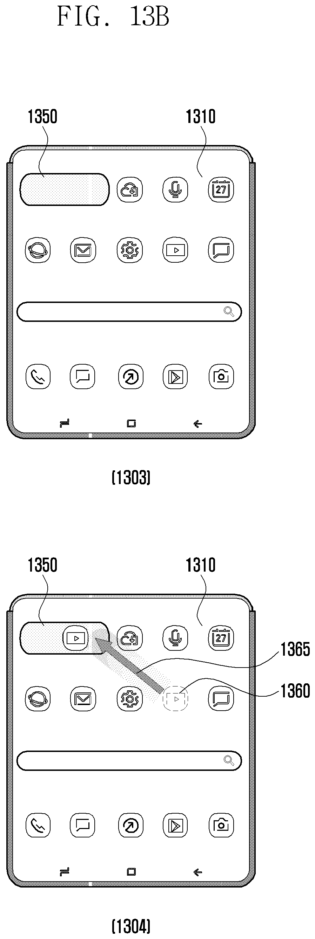

FIG. 13A and FIG. 13B illustrate screens variably operating an aspect ratio by using an app icon in an electronic device according to an embodiment.

Referring to FIG. 13A and FIG. 13B, the electronic device 101 according to an embodiment may support to collectively change an aspect ratio or a resolution of app icons in a grouping manner or a folder generation manner.

According to an embodiment, a user may, as illustrated in view <1301>, change the size of a first app icon 1320 corresponding to a first application displayed on a home screen 1310, to change (e.g., a 16:9 ratio) an aspect ratio of a first app execution screen. The first app icon 1320 may have a second size (e.g., 1*2) obtained by expanding at least a part of width and height ratios of a first size (e.g., 1*1) configured by default.

The user may touch a second app icon 1330 related to a second application displayed on the home screen 1310 and move same to a position displaying the first app icon 1320 in a drag-and-drop manner.

The electronic device 101 may, as illustrated in view <1302>, integrate the second app icon 1330 with the first app icon 1320 to generate an integrated folder 1340 having the second size and display same on the home screen 1310, and may accommodate the first app icon 1320 and the second app icon 1330 in the integrated folder 1340. The electronic device 101 may change the aspect ratio of the second app icon 1330 accommodated in the integrated folder 1340, to be the same (e.g., a 16:9 ratio) as that of the first app icon 1320.

According to another embodiment, a user may, as illustrated in view <1303>, generate an integrated folder 1350 and adjust the size of the integrated folder 1350 so as to change an aspect ratio on the home screen 1310. For example, the user may adjust the size of the integrated folder 1350 to a 1*2 size. The user may touch a third app icon 1360 displayed on the home screen 1310 and move same to a position displaying the integrated folder 1350 by using a drag-and-drop input 1365.

The electronic device 101 may accommodate the third app icon 1360 in the integrated folder 1350, as illustrated in view <1304>. The electronic device 101 may change the aspect ratio of the third app icon 1360 accommodated in the integrated folder 1350, to an aspect ratio (e.g., a 16:9 ratio) corresponding to the size of the integrated folder 1350. App icons accommodated in the integrated folder 1350 may be configured to have an aspect ratio/resolution different from that of app icons displayed at a 1*1 size.

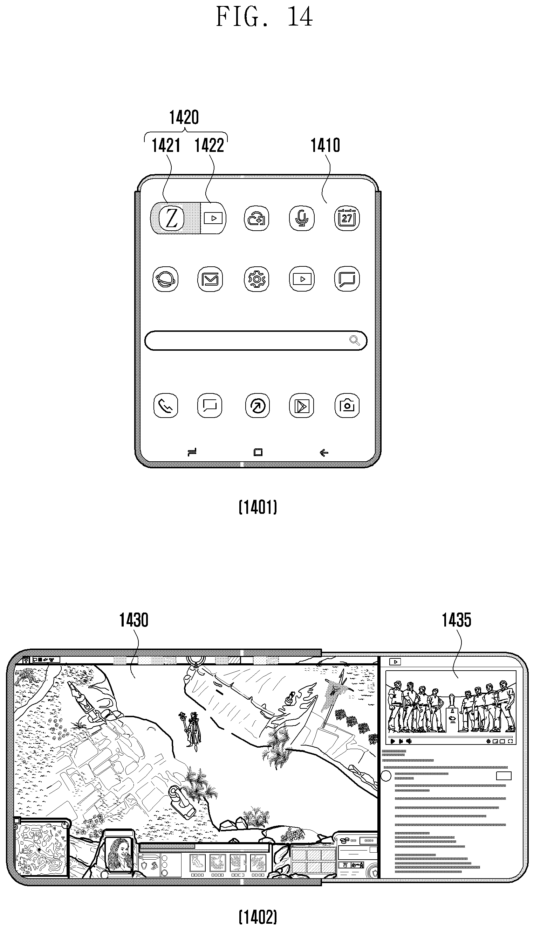

FIG. 14 illustrates screens variably operating an aspect ratio by using an app icon in an electronic device according to an embodiment.

Referring to FIG. 14, the electronic device 101 according to an embodiment may generate a multi-icon to support a change of an aspect ratio or resolution of app icons.

The electronic device 101 according to an embodiment may support a function of integrating multiple icons in a folder scheme or merging same into a multi-icon. For example, the electronic device 101 may ask a user of whether to display a first app icon and a second app icon in an integrated folder scheme or display same as a multi-icon in a process of grouping same, and may generate an integrated folder or a multi-icon according to the user's option selection.

The electronic device 101 may determine the aspect ratio/resolution of the second app icon according to a configuration of the aspect ratio/resolution of the first app icon at the time of generation of a multi-icon. The electronic device 101 may display a first app execution screen and a second app execution screen on the display in a multi-view in response to a multi-icon execution request.

For example, a user may generate and display a multi-icon 1420 on a home screen 1410, as illustrated in view <1401>. The multi-icon 1420 may be an icon obtained by merging a first app icon 1421 and a second app icon 1422.

The user may select (e.g., touch) the multi-icon 1420 displayed on the home screen 1410 to request app execution.

The electronic device 101 may expand a display area of the display and display a first app execution screen 1430 and a second app execution screen 1435, as illustrated in view <1401>. In a case where the user configures 16:9 as the aspect ratio of the first app icon 1421, the electronic device 101 may output a first window of a multi-view at a 16:9 aspect ratio and output a second window at an aspect ratio of the area remaining after excluding the first window. The first app execution screen 1430 may be displayed in the first window and the second app execution screen 1435 may be displayed in the second window.

According to various embodiments, a method for variably operating an aspect ratio by using an app icon of an electronic device (e.g., the electronic device 101 in FIG. 1, the electronic device 200 in FIG. 2A and FIG. 2B, the electronic device 200 in FIG. 3A and FIG. 3B, the electronic device 200 in FIG. 4, the first electronic device 501 in FIG. 5A, the second electronic device 502 in FIG. 5B, or the third electronic device 503 in FIG. 5C) may include displaying an app icon on a display (e.g., the display module 160 in FIG. 1, the display 230 in FIG. 2A and FIG. 2B, the display 230 in FIG. 3A and FIG. 3B, the display 230 in FIG. 4, the display 530 in FIG. 5A, the display 531 in FIG. 5B, or the display 533 in FIG. 5C) that has a first display area in case that a second housing (e.g., the second housing 220 in FIG. 2A and FIG. 2B, the second hosing 510 in FIG. 5A, the first housing 511 in FIG. 5B, or the first housing 5131 in FIG. 5C) is moved in a first direction with respect to a first housing (e.g., the first housing 210 in FIG. 2A and FIG. 2B, the first housing 510 in FIG. 5A, the first housing 521 in FIG. 5B, or the first housing 531 in FIG. 5C), and is configured to be changeable to a second display area expanded greater than the first display area in case that the second housing is moved in a second direction from the first housing by a driving device (e.g., the driving device 185 in FIG. 1), in response to a request of executing the app icon displayed on the display, determining a size of the app icon, the execution of which is requested, in case that the app icon has a first size, displaying an app execution screen at a first aspect ratio or a first resolution on the display of the first display area, in case that the app icon has a second size, based on a second aspect ratio and a second resolution configured to correspond to the second size, changing the display to the second display area, and displaying an app execution screen at the second aspect ratio or the second resolution on the display expanded to the second display area.

According to various embodiments, the displaying of an app icon on the display may further include, in relation to the app icon displayed on the home screen, detecting an aspect ratio configuration request input, displaying an icon ratio configuration user interface (UI), based on the aspect ratio configuration input, displaying, on the home screen, the app icon having a changed size according to a user input based on the icon ratio configuration user interface, and changing an application configuration to at least one of an aspect ratio or a resolution corresponding to the size change of the app icon.

According to various embodiments, in the displaying of the icon ratio configuration user interface (UI), the icon ratio configuration user interface may display a guide box, a size of which is adjustable to overlap with at least a part of a selected app icon, or display multiple aspect ratio configuration items.

According to various embodiments, in the displaying of an app icon on the display, an app icon having different sizes and shapes may be displayed for each aspect ratio or resolution.

According to various embodiments, the displaying of an app execution screen at the first aspect ratio or the first resolution on the display of the first display area may further include detecting an event of the display being expanded from the first display area to the second display area, changing and displaying the app execution screen to have an aspect ratio corresponding to a ratio of the expanded second display area, at a time of the app execution termination in a state where the app execution screen is displayed at a changed aspect ratio to correspond to ratio of the expanded second display area, displaying a guidance user interface of requesting whether to store the changed aspect ratio, in case that a user input of not storing the changed aspect ratio is detected via the guidance user interface, storing an app icon at the first size having been configured by default in relation to an app configuration, and in case that a user input of storing the changed aspect ratio is detected via the guidance user interface, storing an app icon at the second size having a changed aspect ratio to correspond to a ratio of the second display area.

According to various embodiments, the displaying of an app icon on the display may further include detecting an input of merging a first app icon having the first size and a second app icon having the second size and a changed screen configuration on the home screen, generating and displaying, based on the input of merging, an integrated folder accommodating the first app icon and the second app icon, and changing the first app icon accommodated in the integrated folder to have a ratio identical to an aspect ratio of the second app icon.

According to various embodiments, the displaying of an app icon on the display may further include generating an integrated folder in response to a request of generating the integrated folder on the home screen, adjusting a size of the integrated folder, based on an input of adjusting the integrated folder to the second size, and based on accommodating a first app icon in the integrated folder having the adjusted size, changing an aspect ratio related to the first app icon to an aspect ratio or a resolution corresponding to the size of the integrated folder.

According to various embodiments, the displaying of an app icon on the display may further include displaying, on the home screen, a multi-icon in which a first app icon and a second app icon are merged, controlling the driving device in response to a request of executing the multi-icon, to expand the display to the second display area, and displaying a multi-view including a first window corresponding to the first app icon and a second window corresponding to the second app icon on the display of the second display area, wherein, in case that the first window is configured to have the first aspect ratio, the second window is changed according to the first aspect ratio.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

## Claims

1. An electronic device (101, 200) comprising:
a first housing (210);
a second housing (220) disposed to be movable in a first direction or a second direction with respect to the first housing (210);
a driving device (185) configured to be driven to move the second housing (220) with respect to the first housing (210);
a display (230) having a first display area in a case that the electronic device is in a closed state, and having a second display area in a case that the electronic device is in an open state; and
a processor (120) operatively connected to the display (230) and the driving device (185),
wherein the processor (120) is configured to:
display, when the electronic device is in the closed-state, at least one application icon on the display;
**characterized in that** the processor is further configured to:
in response to a request to execute a first application corresponding to a first application icon (915) having a first size, display an application execution screen (920) of the first application at a first aspect ratio or a first resolution corresponding to the first display area; and
in response to a request to execute a second application corresponding to a second application icon (930) having a second size larger than the first size, drive the driving device (185) to change a state of the electronic device from the closed state to the open state and control to display an application execution screen (940) of the second application at a second aspect ratio or a second resolution corresponding to the second display area.

2. The electronic device (101, 200) of claim 1, wherein the at least one application icon is displayed on a home screen (910) or a wallpaper, and
wherein the first size is a size displayed by default on a home screen (910) in a case that an application is installed, and the second size is a size configured to be different in a widthwise direction or a heightwise direction of the first size.

3. The electronic device (101, 200) of claim 2, wherein the processor (120) is configured to:
in relation to a third application icon displayed on the home screen (910), detect an aspect ratio configuration request input;
display an icon ratio configuration user interface (UI), based on the aspect ratio configuration request input;
display, on the home screen (910), the third application icon having a changed size according to a user input based on the icon ratio configuration user interface; and
change an application configuration to at least one of an aspect ratio or a resolution corresponding to the size change of the third application icon.

4. The electronic device (101, 200) of claim 3, wherein the icon ratio configuration user interface is configured to display a guide box, a size of which is adjustable to overlap with at least a part of a selected application icon, or display multiple aspect ratio configuration items.

5. The electronic device (101, 200) of any one of the preceding claims, wherein the processor (120) is configured to:
in a state where the application execution screen of the first application is displayed on the first display area, detect an event of the electronic device being changed from the close state to the open state; and
in response to the detected event, change and display the application execution screen of the first application to have at least one of an aspect ratio or a resolution corresponding to a display ratio of the second display area.

6. The electronic device (101, 200) of claim 5, wherein the processor (120) is configured to:
in response to an application execution termination event in a state where the application execution screen of the first application is displayed at a changed aspect ratio corresponding to the display ratio of the second display area, display a guidance user interface notifying whether o not to store an application at the changed aspect ratio;
in a case that a user input of not storing the application at the changed aspect ratio is detected via the guidance user interface, store the first application icon at the first size having been configured by default in relation to an application configuration; and
in a case that a user input of storing the changed aspect ratio is detected via the guidance user interface, store the first application icon at the second size having a changed aspect ratio to correspond to the display ratio of the second display area.

7. The electronic device (101, 200) of any one of the preceding claims, wherein the processor (120) is configured to, in response to the request to execute an application corresponding to an icon, compare an aspect ratio configured for the application icon with a display ratio of a display area displaying current visual information, and in a case that the display ratio is different from the aspect ratio, drive the driving device to make the display ratio be identical to the aspect ratio configured for the application icon.

8. The electronic device (101, 200) of any one of the preceding claims, wherein the processor is configured to:
detect an input of merging the first application icon having the first size and the second application icon having the second size and a changed screen configuration through a home screen;
based on the input of merging, generate and display an integrated folder accommodating the first application icon and the second application icon; and
change the first application icon accommodated in the integrated folder to have an aspect ratio identical to an aspect ratio of the second application icon.

9. The electronic device (101, 200) of any one of the preceding claims, wherein the processor (120) is configured to:
generate an integrated folder on a home screen, and adjust a size of the integrated folder, based on an input of adjusting the integrated folder to the second size; and
based on accommodating the first application icon in the integrated folder having the adjusted size, change an aspect ratio related to the first application icon to an aspect ratio or a resolution corresponding to the size of the integrated folder.

10. The electronic device (101, 200) of any one of the preceding claims, wherein the processor (120) is configured to:
display, on a home screen, a multi-icon in which the first application icon and the second application icon are merged;
control the driving device in response to a request of executing the multi-icon, to change the state of the electronic device from the closed state to the open state; and
display a multi-view including a first window corresponding to the first application icon and a second window corresponding to the second application icon on the display of the second display area, and
wherein, in a case that the first window is configured to have the first aspect ratio, the second window is changed according to the first aspect ratio.

11. A method of variably operating an aspect ratio by using an application icon of an electronic device according to claim 1, the method comprising:
displaying, when the electronic device is in the closed-state, the at least one application icon on the display (230);
**characterized in that** the method further comprises:
in response to a request to execute the first application corresponding to the first application icon (915) having the first size, displaying (830) the application execution screen of the first application at the first aspect ratio or the first resolution corresponding to the first display area; and
in response to a request to execute the second application corresponding to the second application icon (930) having the second size larger than the first size, driving the driving device (185) to change (840, 850) the state of the electronic device from the closed state to the open state, and displaying (860) the application execution screen of the second application at the second aspect ratio or the second resolution corresponding to the second display area.

12. The method of claim 11, wherein the displaying of the application execution screen of the first application at the first aspect ratio or the first resolution further comprises
detecting an event of the electronic device being changed from the close state to the open state;
in response to the detected event, changing and displaying the application execution screen to have at least one of an aspect ratio or a resolution corresponding to a display ratio of the second display area;
in response to an application execution termination event in a state where the application execution screen is displayed at a changed aspect ratio for the second display area, displaying a guidance user interface of notifying whether to store an application at the changed aspect ratio;
in a case that a user input of not storing the changed aspect ratio is detected via the guidance user interface, storing the first application icon at the first size having been configured by default in relation to an application configuration; and
in a case that a user input of storing the changed aspect ratio is detected via the guidance user interface, storing the first application icon at the second size having a changed aspect ratio to correspond to the display ratio of the second display area.

13. The method of claim 11,wherein the displaying of the at least one application icon on the display (230) further comprises:
detecting an input of merging the first application icon having the first size and the second application icon having the second size and a changed screen configuration on a home screen;
based on the input of merging, generating and displaying an integrated folder accommodating the first application icon and the second application icon; and
changing the first application icon accommodated in the integrated folder to have a ratio identical to an aspect ratio of the second application icon.

14. The method of claim 11, wherein the displaying of the at least one application icon on the display (230) further comprises:
generating an integrated folder in response to a request of generating the integrated folder on a home screen;
adjusting a size of the integrated folder, based on an input of adjusting the integrated folder to the second size; and
based on accommodating the first application icon in the integrated folder having the adjusted size, changing an aspect ratio related to the first application icon to an aspect ratio or a resolution corresponding to the size of the integrated folder.

15. The method of claim 11, wherein the displaying of the at least one application icon on the display (230) further comprises:
displaying, on a home screen, a multi-icon in which the first application icon and the second application icon are merged;
controlling the driving device in response to a request of executing the multi-icon, to change the state of the electronic device from the closed state to the open state; and
displaying a multi-view including a first window corresponding to the first application icon and a second window corresponding to the second application icon on the display of the second display area, and
wherein, in a case that the first window is configured to have the first aspect ratio, the second window is changed according to the first aspect ratio.

## Patentansprüche

1. Elektronische Vorrichtung (101, 200), umfassend:
ein erstes Gehäuse (210);
ein zweites Gehäuse (220), das so angeordnet ist, dass es in einer ersten Richtung oder einer zweiten Richtung in Bezug auf das erste Gehäuse (210) beweglich ist;
eine Antriebsvorrichtung (185), die so konfiguriert ist, dass sie angesteuert wird, um das zweite Gehäuse (220) in Bezug auf das erste Gehäuse (210) zu bewegen;
eine Anzeige (230), die einen ersten Anzeigebereich für den Fall, dass sich die elektronische Vorrichtung in einem geschlossenen Zustand befindet, und einen zweiten Anzeigebereich für den Fall aufweist, dass sich die elektronische Vorrichtung in einem offenen Zustand befindet; und
einen Prozessor (120), der funktionsfähig mit der Anzeige (230) und der Antriebsvorrichtung (185) verbunden ist,
wobei der Prozessor (120) dazu konfiguriert ist,
wenn sich die elektronische Vorrichtung im geschlossenen Zustand befindet, mindestens ein Anwendungssymbol auf der Anzeige anzuzeigen;
**dadurch gekennzeichnet, dass** der Prozessor ferner dazu konfiguriert ist,
als Reaktion auf eine Anforderung zur Ausführung einer ersten Anwendung, die einem ersten Anwendungssymbol (915) mit einer ersten Größe entspricht, einen Anwendungsausführungsbildschirm (920) der ersten Anwendung mit einem ersten Aspektverhältnis oder einer ersten Auflösung entsprechend dem ersten Anzeigebereich anzuzeigen; und
als Reaktion auf eine Anforderung zur Ausführung einer zweiten Anwendung, die einem zweiten Anwendungssymbol (930) mit einer zweiten Größe entspricht, die größer ist als die erste Größe, die Antriebsvorrichtung (185) anzusteuern, um einen Zustand der elektronischen Vorrichtung vom geschlossenen Zustand in den offenen Zustand zu ändern, und einen Steuervorgang durchzuführen, um einen Anwendungsausführungsbildschirm (940) der zweiten Anwendung mit einem zweiten Aspektverhältnis oder einer zweiten Auflösung entsprechend dem zweiten Anzeigebereich anzuzeigen.

2. Elektronische Vorrichtung (101, 200) nach Anspruch 1, wobei das mindestens eine Anwendungssymbol auf einem Startbildschirm (910) oder einem Hintergrundbild angezeigt wird, und
wobei die erste Größe eine Größe ist, die standardmäßig auf einem Startbildschirm (910) angezeigt wird, wenn eine Anwendung installiert ist, während die zweite Größe eine Größe ist, die so konfiguriert ist, dass sie sich in einer Breitenrichtung oder einer Höhenrichtung von der ersten Größe unterscheidet.

3. Elektronische Vorrichtung (101, 200) nach Anspruch 2, wobei der Prozessor (120) dazu konfiguriert ist,
in Bezug auf ein drittes Anwendungssymbol, das auf dem Startbildschirm (910) angezeigt wird, eine Anforderungseingabe für die Konfiguration des Aspektverhältnisses zu erfassen;
auf der Grundlage der Anforderungseingabe für die Konfiguration des Aspektverhältnisses eine Benutzeroberfläche (UI) zur Konfiguration des Symbolverhältnisses anzuzeigen;
auf dem Startbildschirm (910) das dritte Anwendungssymbol mit einer geänderten Größe gemäß einer Benutzereingabe auf der Grundlage der Benutzeroberfläche zur Konfiguration des Symbolverhältnisses anzuzeigen; und
eine Anwendungskonfiguration auf mindestens eines von einem Aspektverhältnis und einer Auflösung entsprechend der Größenänderung des dritten Anwendungssymbols zu ändern.

4. Elektronische Vorrichtung (101, 200) nach Anspruch 3, wobei die Benutzeroberfläche zur Konfiguration des Symbolverhältnisses dazu konfiguriert ist, einen Hilfsrahmen anzuzeigen, dessen Größe so einstellbar ist, dass er sich mit mindestens einem Teil eines ausgewählten Anwendungssymbols überlappt, oder mehrere Konfigurationselemente für das Aspektverhältnis anzuzeigen.

5. Elektronische Vorrichtung (101, 200) nach einem der vorstehenden Ansprüche, wobei der Prozessor (120) dazu konfiguriert ist,
in einem Zustand, in dem der Anwendungsausführungsbildschirm der ersten Anwendung auf dem ersten Anzeigebereich angezeigt wird, ein Ereignis zu erfassen, bei dem die elektronische Vorrichtung vom geschlossenen Zustand in den offenen Zustand wechselt; und
als Reaktion auf das erfasste Ereignis den Anwendungsausführungsbildschirm der ersten Anwendung so zu ändern und anzuzeigen, dass er mindestens eines von einem Aspektverhältnis und einer Auflösung entsprechend einem Anzeigeverhältnis des zweiten Anzeigebereichs aufweist.

6. Elektronische Vorrichtung (101, 200) nach Anspruch 5, wobei der Prozessor (120) dazu konfiguriert ist,
als Reaktion auf ein Ereignis zum Beenden der Anwendungsausführung in einem Zustand, in dem der Anwendungsausführungsbildschirm der ersten Anwendung mit einem geänderten Aspektverhältnis angezeigt wird, das dem Anzeigeverhältnis des zweiten Anzeigebereichs entspricht, eine Anleitungs-Benutzeroberfläche anzuzeigen, die mitteilt, ob eine Anwendung mit dem geänderten Aspektverhältnis gespeichert werden soll oder nicht;
in einem Fall, in dem über die Anleitungs-Benutzeroberfläche eine Benutzereingabe zum Nicht-Speichern der Anwendung mit dem geänderten Aspektverhältnis erfasst wird, das erste Anwendungssymbol in der ersten Größe zu speichern, die standardmäßig in Bezug auf eine Anwendungskonfiguration konfiguriert wurde; und
in einem Fall, in dem über die Anleitungs-Benutzeroberfläche eine Benutzereingabe zum Speichern des geänderten Aspektverhältnisses erfasst wird, das erste Anwendungssymbol in der zweiten Größe zu speichern, die ein geändertes Aspektverhältnis aufweist, um dem Anzeigeverhältnis des zweiten Anzeigebereichs zu entsprechen.

7. Elektronische Vorrichtung (101, 200) nach einem der vorstehenden Ansprüche, wobei der Prozessor (120) dazu konfiguriert ist, als Reaktion auf die Anforderung zur Ausführung einer einem Symbol entsprechende Anwendung,
ein für das Anwendungssymbol konfiguriertes Aspektverhältnis mit einem Anzeigeverhältnis eines Anzeigebereichs zu vergleichen, der aktuelle visuelle Informationen anzeigt, und in dem Fall, dass sich das Anzeigeverhältnis vom Aspektverhältnis unterscheidet, die Antriebsvorrichtung so anzusteuern, dass das Anzeigeverhältnis mit dem für das Anwendungssymbol konfigurierten Aspektverhältnis identisch wird.

8. Elektronische Vorrichtung (101, 200) nach einem der vorstehenden Ansprüche, wobei der Prozessor dazu konfiguriert ist,
eine Eingabe zum Zusammenführen des ersten Anwendungssymbols mit der ersten Größe und des zweiten Anwendungssymbols mit der zweiten Größe sowie eine geänderte Bildschirmkonfiguration über einen Startbildschirm zu erfassen;
auf der Grundlage der Eingabe zum Zusammenführen einen integrierten Ordner zu erzeugen und anzuzeigen, der das erste Anwendungssymbol und das zweite Anwendungssymbol aufnimmt; und
das im integrierten Ordner aufgenommene erste Anwendungssymbol so zu ändern, dass es ein Aspektverhältnis aufweist, das mit einem Aspektverhältnis des zweiten Anwendungssymbols identisch ist.

9. Elektronische Vorrichtung (101, 200) nach einem der vorstehenden Ansprüche, wobei der Prozessor (120) dazu konfiguriert ist,
einen integrierten Ordner auf einem Startbildschirm zu erzeugen und eine Größe des integrierten Ordners auf der Grundlage einer Eingabe zum Anpassen des integrierten Ordners an die zweite Größe anzupassen; und
auf der Grundlage der Aufnahme des ersten Anwendungssymbols im integrierten Ordner mit der angepassten Größe ein Aspektverhältnis, das sich auf das erste Anwendungssymbol bezieht, in ein Aspektverhältnis oder eine Auflösung entsprechend der Größe des integrierten Ordners zu ändern.

10. Elektronische Vorrichtung (101, 200) nach einem der vorstehenden Ansprüche, wobei der Prozessor (120) dazu konfiguriert ist,
auf einem Startbildschirm ein Mehrfachsymbol anzuzeigen, in dem das erste Anwendungssymbol und das zweite Anwendungssymbol zusammengeführt sind;
die Antriebsvorrichtung als Reaktion auf eine Anforderung zur Ausführung des Mehrfachsymbols zu steuern, um den Zustand der elektronischen Vorrichtung vom geschlossenen Zustand in den offenen Zustand zu ändern; und
auf der Anzeige des zweiten Anzeigebereichs eine Mehrfachansicht anzuzeigen, die ein erstes Fenster, das dem ersten Anwendungssymbol entspricht, und ein zweites Fenster, das dem zweiten Anwendungssymbol entspricht, umfasst, und
wobei in einem Fall, in dem das erste Fenster so konfiguriert ist, dass es das erste Aspektverhältnis aufweist, das zweite Fenster gemäß dem ersten Aspektverhältnis geändert wird.

11. Verfahren zum variablen Betrieb eines Aspektverhältnisses unter Verwendung eines Anwendungssymbols einer elektronischen Vorrichtung nach Anspruch 1, wobei das Verfahren Folgendes umfasst:
Anzeigen des mindestens einen Anwendungssymbols auf der Anzeige (230), wenn sich die elektronische Vorrichtung im geschlossenen Zustand befindet;
**dadurch gekennzeichnet, dass** das Verfahren ferner Folgendes umfasst:
Anzeigen (830) des Anwendungsausführungsbildschirms der ersten Anwendung mit dem ersten Aspektverhältnis oder der ersten Auflösung entsprechend dem ersten Anzeigebereich als Reaktion auf eine Anforderung zur Ausführung der ersten Anwendung, die dem ersten Anwendungssymbol (915) mit der ersten Größe entspricht; und
als Reaktion auf eine Anforderung zur Ausführung der zweiten Anwendung, die dem zweiten Anwendungssymbol (930) mit der zweiten Größe entspricht, die größer ist als die erste Größe, Ansteuern der Antriebsvorrichtung (185), um den Zustand der elektronischen Vorrichtung vom geschlossenen Zustand in den offenen Zustand zu ändern (840, 850), und Anzeigen (860) des Anwendungsausführungsbildschirms der zweiten Anwendung mit dem zweiten Aspektverhältnis oder der zweiten Auflösung entsprechend dem zweiten Anzeigebereich.

12. Verfahren nach Anspruch 11, wobei das Anzeigen des Anwendungsausführungsbildschirms der ersten Anwendung mit dem ersten Aspektverhältnis oder der ersten Auflösung ferner Folgendes umfasst:
Erfassen eines Ereignisses, bei dem die elektronische Vorrichtung vom geschlossenen Zustand in den offenen Zustand wechselt;
Ändern und Anzeigen des Anwendungsausführungsbildschirms als Reaktion auf das erfasste Ereignis, so dass dieser mindestens eines von einem Aspektverhältnis und einer Auflösung entsprechend einem Anzeigeverhältnis des zweiten Anzeigebereichs aufweist;
als Reaktion auf ein Ereignis zum Beenden der Anwendungsausführung in einem Zustand, in dem der Anwendungsausführungsbildschirm mit einem geänderten Aspektverhältnis für den zweiten Anzeigebereich angezeigt wird, Anzeigen einer Anleitungs-Benutzeroberfläche, die mitteilt, ob eine Anwendung mit dem geänderten Aspektverhältnis gespeichert werden soll;
falls über die Anleitungs-Benutzeroberfläche eine Benutzereingabe zum Nicht-Speichern des geänderten Aspektverhältnisses erfasst wird, Speichern des ersten Anwendungssymbols in der ersten Größe, die standardmäßig in Bezug auf eine Anwendungskonfiguration konfiguriert wurde; und
falls über die Anleitungs-Benutzeroberfläche eine Benutzereingabe zum Speichern des geänderten Aspektverhältnisses erfasst wird, Speichern des ersten Anwendungssymbols in der zweiten Größe, die ein geändertes Aspektverhältnis aufweist, um dem Anzeigeverhältnis des zweiten Anzeigebereichs zu entsprechen.

13. Verfahren nach Anspruch 11, wobei das Anzeigen des mindestens einen Anwendungssymbols auf der Anzeige (230) ferner Folgendes umfasst:
Erfassen einer Eingabe zum Zusammenführen des ersten Anwendungssymbols mit der ersten Größe und des zweiten Anwendungssymbols mit der zweiten Größe sowie einer geänderten Bildschirmkonfiguration auf einem Startbildschirm;
Erzeugen und Anzeigen eines integrierten Ordners auf der Grundlage der Eingabe zum Zusammenführen, der das erste Anwendungssymbol und das zweite Anwendungssymbol aufnimmt; und
Ändern des im integrierten Ordner aufgenommenen ersten Anwendungssymbols, so dass es ein Verhältnis aufweist, das mit einem Aspektverhältnis des zweiten Anwendungssymbols identisch ist.

14. Verfahren nach Anspruch 11, wobei das Anzeigen des mindestens einen Anwendungssymbols auf der Anzeige (230) ferner Folgendes umfasst:
Erzeugen eines integrierten Ordners als Reaktion auf eine Anforderung zur Erzeugung des integrierten Ordners auf einem Startbildschirm;
Anpassen einer Größe des integrierten Ordners auf der Grundlage einer Eingabe zur Anpassung des integrierten Ordners an die zweite Größe; und
auf der Grundlage der Aufnahme des ersten Anwendungssymbols im integrierten Ordner mit der angepassten Größe, Ändern eines Aspektverhältnisses, das sich auf das erste Anwendungssymbol bezieht, in ein Aspektverhältnis oder eine Auflösung entsprechend der Größe des integrierten Ordners.

15. Verfahren nach Anspruch 11, wobei das Anzeigen des mindestens einen Anwendungssymbols auf der Anzeige (230) ferner Folgendes umfasst:
Anzeigen eines Multisymbols auf einem Startbildschirm, in dem das erste Anwendungssymbol und das zweite Anwendungssymbol zusammengeführt sind;
Steuern der Antriebsvorrichtung als Reaktion auf eine Anforderung zur Ausführung des Multisymbols, um den Zustand der elektronischen Vorrichtung vom geschlossenen Zustand in den offenen Zustand zu ändern; und
Anzeigen einer Mehrfachansicht, die ein erstes Fenster, das dem ersten Anwendungssymbol entspricht, und ein zweites Fenster, das dem zweiten Anwendungssymbol entspricht, umfasst, auf der Anzeige des zweiten Anzeigebereichs, und
wobei in einem Fall, in dem das erste Fenster so konfiguriert ist, dass es das erste Aspektverhältnis aufweist, das zweite Fenster gemäß dem ersten Aspektverhältnis geändert wird.

## Revendications

1. Dispositif électronique (101, 200), comprenant :
un premier boîtier (210) ;
un second boîtier (220) disposé pour être mobile dans une première direction ou une seconde direction par rapport au premier boîtier (210) ;
un dispositif d'entrainement (185) configuré pour être entraîné pour déplacer le second boîtier (220) par rapport au premier boîtier (210) ;
un afficheur (230) ayant une première zone d'affichage dans le cas où le dispositif électronique est dans un état fermé, et ayant une seconde zone d'affichage dans le cas où le dispositif électronique est dans un état ouvert ; et
un processeur (120) connecté de manière opérationnelle à l'afficheur (230) et au dispositif d'entrainement (185),
dans lequel le processeur (120) est configuré pour :
afficher, lorsque le dispositif électronique est dans l'état fermé, au moins une icône d'application sur l'afficheur ;
**caractérisé en ce que** le processeur est en outre configuré pour :
en réponse à une demande destinée à exécuter une première application correspondant à une première icône d'application (915) présentant une première taille, afficher un écran d'exécution d'application (920) de la première application à un premier rapport d'aspect ou à une première résolution correspondant à la première zone d'affichage ; et
en réponse à une demande destinée à exécuter une seconde application correspondant à une seconde icône d'application (930) présentant une seconde taille supérieure à la première taille, entraîner le dispositif d'entraînement (185) à changer un état du dispositif électronique de l'état fermé à l'état ouvert et commander à afficher un écran d'exécution d'application (940) de la seconde application à un second rapport d'aspect ou à une seconde résolution correspondant à la seconde zone d'affichage.

2. Dispositif électronique (101, 200) selon la revendication 1, dans lequel au moins une icône d'application est affichée sur un écran d'accueil (910) ou un fond d'écran, et
dans lequel la première taille est une taille affichée par défaut sur un écran d'accueil (910) dans le cas où une application est installée, et la seconde taille est une taille configurée pour être différente dans une direction en largeur ou une direction en hauteur de la première taille.

3. Dispositif électronique (101, 200) selon la revendication 2, dans lequel le processeur (120) est configuré pour :
en relation avec une troisième icône d'application affichée sur l'écran d'accueil (910), détecter une entrée de demande de configuration de rapport d'aspect ;
afficher une interface utilisateur (UI) de configuration de rapport d'icônes, sur la base de l'entrée de demande de configuration de rapport d'aspect ;
afficher, sur l'écran d'accueil (910), la troisième icône d'application présentant une taille changée selon une entrée utilisateur sur la base de l'interface utilisateur de configuration de rapport d'icônes ; et
modifier une configuration d'application pour au moins l'un d'un rapport d'aspect ou d'une résolution correspondant au changement de taille de la troisième icône d'application.

4. Dispositif électronique (101, 200) selon la revendication 3, dans lequel l'interface utilisateur de configuration de rapport d'icônes est configurée pour afficher une boîte-guide, dont une taille est ajustable pour chevaucher au moins une partie d'une icône d'application sélectionnée, ou afficher plusieurs éléments de configuration de rapport d'aspect.

5. Dispositif électronique (101, 200) selon l'une quelconque des revendications précédentes, dans lequel le processeur (120) est configuré pour :
dans un état où l'écran d'exécution d'application de la première application est affiché sur la première zone d'affichage, détecter un événement que le dispositif électronique passe de l'état fermé à l'état ouvert ; et
en réponse à l'événement détecté, changer et afficher l'écran d'exécution d'application de la première application pour avoir au moins l'un d'un rapport d'aspect ou d'une résolution correspondant à un rapport d'affichage de la seconde zone d'affichage.

6. Dispositif électronique (101, 200) selon la revendication 5, dans lequel le processeur (120) est configuré pour :
en réponse à un événement de terminaison d'exécution d'application dans un état où l'écran d'exécution d'application de la première application est affiché à un rapport d'aspect changé correspondant au rapport d'affichage de la seconde zone d'affichage, afficher une interface utilisateur de guidage notifiant s'il faut ou non stocker une application au rapport d'aspect changé ;
dans le cas où une entrée utilisateur destinée à non-stocker l'application au rapport d'aspect changé est détectée à travers l'interface utilisateur de guidage, stocker la première icône d'application à la première taille qui a été configurée par défaut en relation avec une configuration d'application ; et
dans le cas où une entrée utilisateur destinée à stocker le rapport d'aspect changé est détectée à travers l'interface utilisateur de guidage, stocker la première icône d'application à la seconde taille présentant un rapport d'aspect changé pour correspondre au rapport d'affichage de la seconde zone d'affichage.

7. Dispositif électronique (101, 200) selon l'une quelconque des revendications précédentes, dans lequel le processeur (120) est configuré pour, en réponse à la demande destinée à exécuter une application correspondant à une icône,
comparer un rapport d'aspect configuré pour l'icône d'application avec un rapport d'affichage d'une zone d'affichage affichant des informations visuelles actuelles, et dans le cas où le rapport d'affichage est différent du rapport d'aspect, entraîner le dispositif d'entraînement à rendre le rapport d'affichage identique au rapport d'aspect configuré pour l'icône d'application.

8. Dispositif électronique (101, 200) selon l'une quelconque des revendications précédentes, dans lequel le processeur est configuré pour :
détecter une entrée destinée à combiner la première icône d'application présentant la première taille et la deuxième icône d'application présentant la seconde taille ainsi qu'une configuration d'écran changée à travers un écran d'accueil ;
sur la base de l'entrée de combinaison, générer et afficher un dossier intégré contenant la première icône d'application et la deuxième icône d'application ; et
changer la première icône d'application contenue dans le dossier intégré pour avoir un rapport d'aspect identique à un rapport d'aspect de la deuxième icône d'application.

9. Dispositif électronique (101, 200) selon l'une quelconque des revendications précédentes, dans lequel le processeur (120) est configuré pour :
générer un dossier intégré sur un écran d'accueil, et ajuster une taille du dossier intégré, sur la base d'une entrée destinée à ajuster le dossier intégré à la seconde taille ; et
sur la base de ce que la première icône d'application est contenue dans le dossier intégré ayant la taille ajustée, changer un rapport d'aspect lié à la première icône d'application à un rapport d'aspect ou à une résolution correspondant à la taille du dossier intégré.

10. Dispositif électronique (101, 200) selon l'une quelconque des revendications précédentes, dans lequel le processeur (120) est configuré pour :
afficher, sur un écran d'accueil, une icône multiple dans laquelle la première icône d'application et la deuxième icône d'application sont combinées ;
commander le dispositif d'entraînement en réponse à une demande destinée à exécuter l'icône multiple, à changer l'état du dispositif électronique de l'état fermé à l'état ouvert ; et
afficher une vue multiple incluant une première fenêtre correspondant à la première icône d'application et une seconde fenêtre correspondant à la deuxième icône d'application sur l'afficheur de la seconde zone d'affichage, et
dans le cas où la première fenêtre est configurée pour avoir le premier rapport d'aspect, la seconde fenêtre est changée selon le premier rapport d'aspect.

11. Procédé permettant de faire varier un rapport d'aspect au moyen d'une icône d'application d'un dispositif électronique selon la revendication 1, le procédé comprenant :
afficher, lorsque le dispositif électronique est dans l'état fermé, au moins l'une icône d'application sur l'afficheur (230) ;
**caractérisé en ce que**, le procédé comprend en outre :
en réponse à une demande destinée à exécuter la première application correspondant à la première icône d'application (915) présentant la première taille, afficher (830) l'écran d'exécution d'application de la première application au premier rapport d'aspect ou à la première résolution correspondant à la première zone d'affichage ; et
en réponse à une demande destinée à exécuter la seconde application correspondant à la seconde icône d'application (930) présentant la seconde taille supérieure à la première taille, entraîner le dispositif d'entraînement (185) à changer (840, 850) un état du dispositif électronique de l'état fermé à l'état ouvert et afficher (860) l'écran d'exécution d'application de la seconde application au second rapport d'aspect ou à la seconde résolution correspondant à la seconde zone d'affichage.

12. Procédé selon la revendication 11, dans lequel l'affichage de l'écran d'exécution d'application de la première application au premier rapport d'aspect ou à la première résolution comprend en outre
détecter un événement que le dispositif électronique passe de l'état fermé à l'état ouvert ;
en réponse à l'événement détecté, changer et afficher l'écran d'exécution d'application pour avoir au moins l'un d'un rapport d'aspect ou d'une résolution correspondant à un rapport d'affichage de la seconde zone d'affichage ;
en réponse à un événement de terminaison d'exécution d'application dans un état où l'écran d'exécution d'application est affiché à un rapport d'aspect changé pour la seconde zone d'affichage, afficher une interface utilisateur de guidage notifiant s'il faut ou non stocker une application au rapport d'aspect changé ;
dans le cas où une entrée utilisateur destinée à non-stocker le rapport d'aspect changé est détectée à travers l'interface utilisateur de guidage, stocker la première icône d'application à la première taille qui a été configurée par défaut en relation avec une configuration d'application ; et
dans le cas où une entrée utilisateur destinée à stocker le rapport d'aspect changé est détectée à travers l'interface utilisateur de guidage, stocker la première icône d'application à la seconde taille présentant un rapport d'aspect changé pour correspondre au rapport d'affichage de la seconde zone d'affichage.

13. Procédé selon la revendication 11, dans lequel l'affichage d'au moins l'une icône d'application sur l'afficheur (230) comprend en outre :
détecter une entrée destinée à combiner la première icône d'application présentant la première taille et la deuxième icône d'application présentant la seconde taille ainsi qu'une configuration d'écran changée sur un écran d'accueil ;
sur la base de l'entrée de combinaison, générer et afficher un dossier intégré contenant la première icône d'application et la deuxième icône d'application ; et
changer la première icône d'application contenue dans le dossier intégré pour avoir un rapport identique à un rapport d'aspect de la deuxième icône d'application.

14. Procédé selon la revendication 11, dans lequel l'affichage d'au moins l'une icône d'application sur l'afficheur (230) comprend en outre :
générer un dossier intégré en réponse à une demande destinée à générer un dossier intégré sur un écran d'accueil ;
ajuster une taille du dossier intégré, sur la base d'une entrée destinée à ajuster le dossier intégré à la seconde taille ; et
sur la base de ce que la première icône d'application est contenue dans le dossier intégré ayant la taille ajustée, changer un rapport d'aspect lié à la première icône d'application à un rapport d'aspect ou à une résolution correspondant à la taille du dossier intégré.

15. Procédé selon la revendication 11, dans lequel l'affichage d'au moins l'une icône d'application sur l'afficheur (230) comprend en outre :
afficher, sur un écran d'accueil, une icône multiple dans laquelle la première icône d'application et la deuxième icône d'application sont combinées ;
commander le dispositif d'entraînement en réponse à une demande destinée à exécuter l'icône multiple, à changer l'état du dispositif électronique de l'état fermé à l'état ouvert ; et
afficher une vue multiple incluant une première fenêtre correspondant à la première icône d'application et une seconde fenêtre correspondant à la deuxième icône d'application sur l'afficheur de la seconde zone d'affichage, et
dans le cas où la première fenêtre est configurée pour avoir le premier rapport d'aspect, la seconde fenêtre est changée selon le premier rapport d'aspect.
